# EUROPEAN PATENT SPECIFICATION

(11) **EP 4 263 672 B1**
(45) Date of publication and mention of the grant of the patent: **09.10.2024**
(21) Application number: 21835284.7
(22) Date of filing: 10.12.2021
(51) Int. Cl.: C08G 71/04, C08J 9/02, C08J 11/06

(54) **SELF-BLOWING ISOCYANATE-FREE POLYURETHANE FOAMS**
SELBSTBLÄHENDE ISOCYANATFREIE POLYURETHANSCHAUMSTOFFE
MOUSSES DE POLYURÉTHANE À AUTOSOUFFLAGE SANS ISOCYANATE

(30) Priority: 18.12.2020 EP 20215443
(43) Date of publication of application: 25.10.2023
(73) Proprietor: Université de Liège, 4000 Liège (BE)
(72) Inventor: DETREMBLEUR, Christophe, 4000 Liège (BE); GRIGNARD, Bruno, 4000 Liège (BE); MONIE, Florent, 4000 Liège (BE)
(74) Representative: V.O.
(86) International application number: PCT/EP2021/085305
(87) International publication number: WO 2022/128822

(56) References cited:
- WO-A1-2021/004993
- US-A1- 2014 182 784
- HANNES BLATTMANN ET AL: "Flexible and Bio-Based Nonisocyanate Polyurethane (NIPU) Foams", MACROMOLECULAR MATERIALS AND ENGINEERING., vol. 301, no. 8, 1 August 2016 (2016-08-01), DE, pages 944 - 952, XP055541228, ISSN: 1438-7492, DOI: 10.1002/mame.201600141
- GAMA NUNO ET AL: "Polyurethane Foams: Past, Present, and Future", MATERIALS, vol. 11, no. 10, 27 September 2018 (2018-09-27), pages 1841, XP055896838, Retrieved from the Internet <URL:https://www.ncbi.nlm.nih.gov/pmc/articles/PMC6213201/pdf/materials-11-01841.pdf> DOI: 10.3390/ma11101841

## Description

### TECHNICAL FIELD OF THE INVENTION

The present invention relates to a method for producing self-blowing isocyanate-free polyurethanes foams from reactive curable isocyanate-free polyurethane formulations, and the curable isocyanate-free formulations for use in said process. The invention also relates to the process for recycling said foams and the recycled polyurethane foam products formed thereof.

### BACKGROUND OF THE INVENTION

Polyurethanes (PUs) are employed in a wide range of applications, notably in the form of foams. Depending on their composition, polyurethane foams can vary in structure from soft flexible foams to rigid foams used in insulation or structural materials. Flexible or rigid polyurethane foams are key players for designing materials for wellness, furniture, mattresses, shock absorption, thermal/acoustic insulation or sealants.

Industrially, polyurethane foams are most often obtained by polymerization between a polyisocyanate and a hydroxyl terminated oligomer (polyol). Their foaming is generally induced by the in-situ generation of carbon dioxide (CO₂) upon addition of water within the reactive formulation (see reaction scheme 1 below). The water provokes the hydrolysis of the isocyanate into CO₂ acting as a blowing agent and an amine that is incorporated into the growing PU chains.

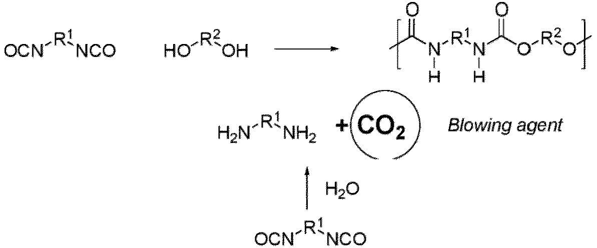

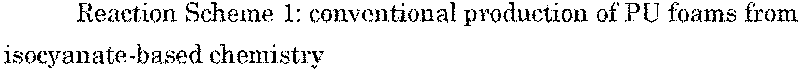

Instead of water, other blowing agents may be used to perform expansion and foaming of the polymeric matrix. The blowing agent may be either produced in situ as a reaction product of the reactants (like water and isocyanate producing carbon dioxide). These blowing agents are called chemical blowing agents. Or the blowing agent may be a physical blowing agent, i.e. a non-reactive compound contained in the polymeric composition that is able to generate bubbles in the polymeric matrix during its formation, thereby leading to foam.

However, polyurethane foams derived from polyisocyanates are associated with environmental issues because isocyanate raw materials, in particular methylene diphenyl 4,4'-diisocyanate (MDI) and toluene diisocyanate (TDI), the most widely used isocyanates in the polyurethane industry, and the corresponding aromatic diamines are classified as toxic (carcinogenic, mutagenic and reprotoxic substances). Prolonged exposure may lead to health problems such as asthma or other pulmonary diseases. They are also produced from the even more toxic and explosive phosgene and their decomposition induces the formation of carcinogenic mutagenic reprotoxic products. Due to these concerns, the handling of isocyanate is strictly regulated by REACH.

US2014/182784 and WO2021/004993 discloses non-isocyanate polyurethane foams. Hannes Blattmann et al discloses NIPU foams "Flexible and Bio-based Non-isocyanate polyurethane (NIPU)Foams" Macromolecular Materials and Engineering, Vol.301, n°8, 1 August 2016, pp.944-952. Therefore, there is a need to develop greener and safer ways to produce sustainable PUs which are not derived from polyisocyanates. The synthesis of non-isocyanate polyurethanes (NIPUs) by copolymerization of a bicyclic carbonate monomer and a diamine represents one of the most promising alternatives to the conventional synthesis of PUs. These polymers are also referred to as polyhydroxyurethanes (see reaction scheme 2 below). See "Isocyanate-Free Routes to Polyurethanes and Poly(hydroxy Urethane)s", by L. Maisonneuve, O. Lamarzelle, E. Rix, E. Grau, H. Cramail, Chem. Rev., 2015, 115, 22, 12407-12439.

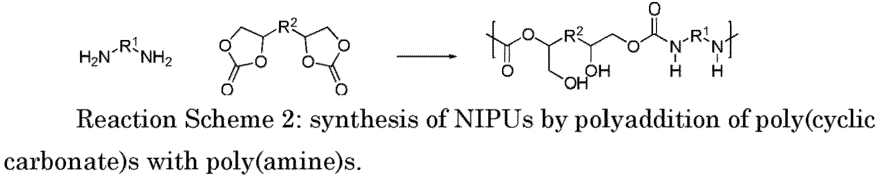

Gama Nuno et al disclose "Polyurethane foams: Past, Present and Future" Materials, vol.11, n°10, 27 september 2018, p.1841. Recently, Detrembleur et al. showed that cyclic carbonates (used as monomers in the formulation of NIPU) underwent decarboxylation upon reaction with thiols using an appropriate catalyst such as an organobase ("Chemo- and regio-selective additions of nucleophiles to cyclic carbonates for the preparation of self-blowing non-isocyanate polyurethane foams", Angew. Chem. Int. Ed. 2020, 59, 17033-17041). The incorporation of thiols within the NIPU formulation provided self-blowing NIPU foams which density and mechanical properties were adjusted by controlling the thiol content and carbonate/amine composition (see reaction scheme 3 below).

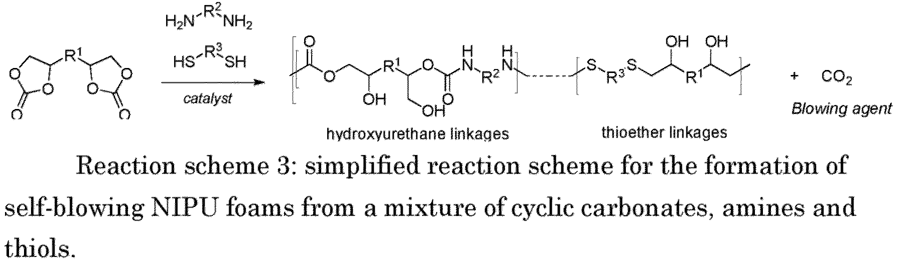

The formation of NIPUs occurred simultaneously with the decarboxylative thiolation of the carbonates promoting the expansion of the material upon heating in 1 to 24h, providing flexible to rigid foams with densities of 60 kg/m³ to 500-800 kg/m³. In that process, the thiol induced not only the in-situ formation of CO₂ as a blowing agent, but it also acted as a crosslinker helping the fixation of the 3D structural morphology of the foams and as a reactive diluent.

However, this process still suffers from drawbacks such as the use of thiols with a bad smell, the fact that unreacted thiol can diffuse out of the final foamed material, which is highly undesirable. This is even more important when monothiols are used, and most importantly, the difficulty to adapt the viscosity of the formulation prior to foaming, which often requires a multistep procedure for the foaming, i.e. first reacting the formulation at moderate temperature to enable the construction of NIPU backbone by aminolysis of the cyclic carbonate to increase the viscosity of the formulation, followed by foaming at a higher temperature by promoting the reaction of the thiol with the cyclic carbonates. This viscosity control is crucial because if the blowing agent is generated too early, the gas escapes the polymer matrix and does not foam it (leads to collapse of the foam), and when it is formed too late, the polymer matrix is too rigid and does not foam properly.

The present invention therefore seeks to provide an improved self-blowing formulation to prepare NIPU foams of varying density and good foam quality not showing the disadvantages of the prior art mentioned above, in particular allowing control of the generation of the blowing agent. The present invention further seeks to provide a simple one-step process to prepare NIPU foams from said self-blowing formulations that is easy to implement on an industrial scale.

### DESCRIPTION OF THE INVENTION

Surprisingly, we have now shown that masked thiol precursors can be used instead of thiols (or in combination with thiols) in formulations containing cyclic carbonates and amines to provide self-blowing non-isocyanate polyurethane foams (see reaction scheme below) while solving the above mentioned limitations and facilitating the preparation of high performance foams in an industrially relevant manner.

In this invention the term "masked thiol precursor" is used to designate a chemical compound (a thiol precursor) wherein the thiol functional groups are disguised (masked) and from which the derivative thiol compound can be easily obtained.

In this invention, the thiols are formed in-situ from the masked thiol precursors by different ways, e.g. aminolysis of the masked thiol precursors or by an external trigger such as light or the temperature. The use of an external trigger such as light is also a way to activate the foaming when it is needed at a precise location, giving access to spatio-temporal control of the foaming (of relevance for instance for the construction of 3D foamed objects by 3D printing).

One advantage of using masked thiol precursors over thiols of the prior art is that the polymer matrix can be partly constructed prior to the foaming. Aminolysis of the cyclic carbonate (reaction enabling to form the NIPU chains) will occur simultaneously with the aminolysis of the masked thiol precursor (when this one can be aminolyzed), the latter generating the thiol that will then be involved in the decarboxylative thiolation of the cyclic carbonate. The rates of aminolysis and thiolation are therefore decoupled and facilitate the adjustment of the formulation viscosity prior to foaming.

Another advantage of the present process is that when using masked thiol precursors in the form of cyclic structures (e.g. thiolactones, cyclic thiocarbonates, cyclic S-thiocarbamate), their aminolysis ring opens the cyclic structures, leaving the thiol bond to the structure that will then be involved in the decarboxylation of the cyclic carbonate (see reaction scheme 4 below). There is thus no release of any side product in the formulation during the reaction, which is strongly beneficial to the final product. Importantly, the aminolysis of the masked thiol precursor, besides generating the thiol, is also creating an additional linkage in the NIPU backbone that contributes to the mechanical properties of the final material (e.g. an amide linkage by aminolysis of a thiolactone). This ring opening together with the generation of this new linkage can also occur rapidly without any catalyst at reasonable temperature (25-60°C), facilitating reaching the appropriate viscosity (due to additional hydrogen bonding) prior to foaming, the latter step requiring the addition of a catalyst. Another advantage of the process of the present invention is that mixtures of different masked thiol precursors can be used, which will contribute to generating different linkages (e.g. (thio)amides, (thio)urea, etc.) in the polymer as exemplified in the scheme below (scheme 4). These additional linkages will contribute to the properties of the final foamed material.

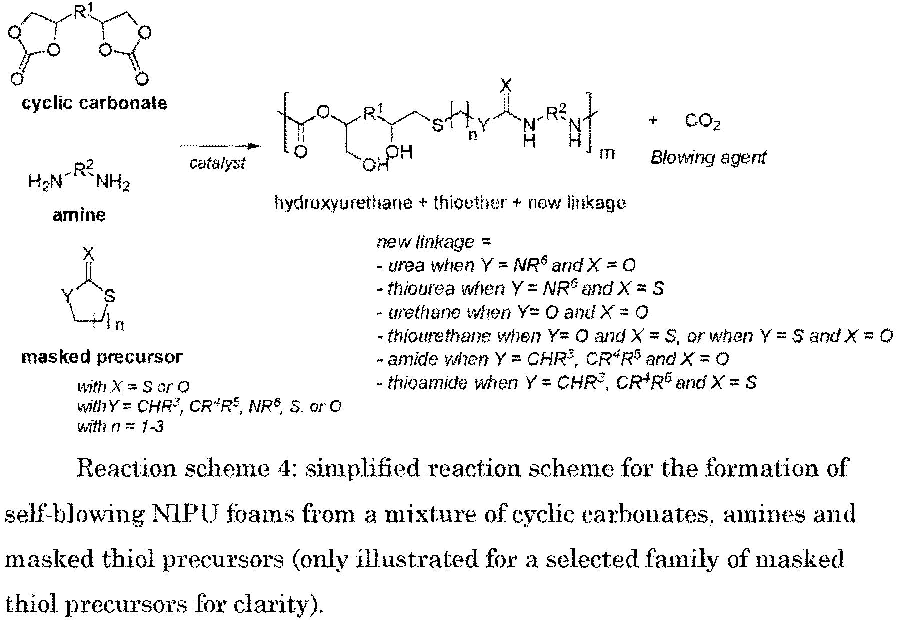

As another advantage of the present invention, polymers bearing masked thiol precursors in their main polymer backbone or as side groups can also be used in the formulation, most preferably in the form of oligomers, to improve the formulation viscosity prior to foaming, to generate in-situ the thiols required for foaming and to act as foam crosslinker, with the possibility to add multiple functionality to the final foam (e.g. antibacterial, antiviral) by the nature of the polymer used.

Mixtures of different masked thiol precursors can also be used that will in-situ generate the thiols at different times, enabling to better control the foaming and to adjust the foam properties.

As another important advantage, the use of a masked thiol precursor can avoid having to use a multistep foaming process, which strongly simplifies the foaming procedure (vs the one using thiols). It also permits to better control the viscosity of the formulation. Controlling the viscosity of the precursors mixture is generally a key parameter to allow the easy deposition of the formulations onto various substrates with syringes (process analogue to silicone cartridges) or pistols/injectors for sealing applications (foams in place, gaskets), for the conception of (Al-sandwich) panels for thermal and/or acoustic insulation through continuous processes (cf Xtrathem, Recticel, Unilin or Arcelor Mittal...) or for reactive molding-foaming to design flexible to rigid foams for cushioning, mattresses, seats, furniture's etc. for the automotive, aeronautic, building, housing, shoeing and health sectors.

As another important advantage compared to prior art formulations containing thiols, the use of a catalyst is not always needed. The addition of catalysts however accelerates the foaming. In the prior art using thiols, the addition of a catalyst is mandatory for promoting the foaming.

The inventors of the present invention have succeeded in providing such a formulation and process meeting all these needs.

According to one aspect of the present invention a curable isocyanate-free formulation for preparing a polyurethane self-blowing foam is provided, said formulation comprising at least one multifunctional cyclic carbonate having at least two cyclic carbonate groups at the end of the chain (compound A), at least one multifunctional amine (compound B), at least one masked thiol precursor (compound C) and optionally at least one catalyst (compound D).

According to another aspect of the present invention a process for preparing a polyurethane self-blowing foam is provided comprising the steps of providing said formulation and curing it so as to promote the formation of CO₂ and form a non-isocyanate polyurethane foam.

According to yet another aspect of the present invention a non-isocyanate polyurethane foam is provided by said process using said formulation.

According to yet another aspect of the present invention a process for recycling said polyurethane foam by compression molding or extrusion is provided.

According to yet another aspect of the present invention a recycled polyurethane foam processed as film, coating, adhesive, fibre or as bulk material is provided.

The inventors found that cyclic carbonates undergo decarboxylation upon addition of masked thiol precursors optionally in the presence of an appropriate catalyst, typically an (organo)base, within the NIPU formulation (mixture of polyamines and polycyclic carbonates), thereby generating in-situ the blowing agent leading to the formation of NIPU foams (see reaction scheme 4 above).

The incorporation of masked thiol precursors within the NIPU formulation surprisingly provides self-blowing NIPU foams generally at a temperature of from 60°C to 160°C of which the density and mechanical properties may be adjusted by controlling the masked thiol precursor content and structure, and carbonate/amine composition and structure. The formation of NIPU polymers occurs simultaneously with the in-situ generation of a thiol from the masked thiol precursor followed by the decarboxylative alkylation of thiol with carbonate, promoting the expansion of the material upon heating generally within 1 min (e.g. at high temperature such as 160°C) to 24h, providing flexible to rigid foams with densities generally within the range of 10 kg/m³ to 800 kg/m³. As an additional advantage, the reaction of the amine with the masked thiol precursor forms a linkage that is incorporated within the polymer structure and releases a thiol that reacts with the cyclic carbonate to form CO₂ and a thioether linkage that is also incorporated within the polymer structure. Therefore, the reaction of the amine with the masked thiol precursor forms two additional linkages that contribute also to the formation of the polymer and thus helps fixating the 3D structural morphology of the foams. The content of each bond depends on the amine/masked thiol precursor content in the initial formulation. The structure of the NIPU foam of the present invention is therefore different to those of the state of the art that do not contain these additional linkages.

The masked thiol precursor also allows to adjust the viscosity of the starting formulation. Controlling the viscosity of the precursor mixture is generally a key parameter to allow the easy deposition of the formulations onto various substrates without using organic solvents. The NIPU formulation may be applied by any suitable means. Examples include the deposition with syringes, through pistols or injectors, through continuous processes, through reactive molding or reactive foaming, by spraying means, through extruders.

### DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise.

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

The terms "about" or "approximate" and the like are synonymous and are used to indicate that the value modified by the term has an understood range associated with it, where the range can be +20%, +15%, +10%, +5%, or +1%. The term "substantially" is used to indicate that a result (e.g., measurement value) is close to a targeted value, where close can mean, for example, the result is within 80% of the value, within 90% of the value, within 95% of the value, or within 99% of the value.

In the following description, the expressions "isocyanate free" and "non-isocyanate" refer to compositions which do not contain polyisocyanates.

The term "ketone" denotes a C=O group.

The term "heteroatom" denotes an atom selected from N, O, S, Si and S(O)n (where n is 0, 1 or 2), SiO.

The term "alkyl" denotes a saturated hydrocarbon chain, for example a hydrocarbon chain from 1 to 20 carbon atoms.

The term "cycloalkyl" denotes a monovalent or bivalent 3 to 8 membered carbon ring, for example cyclopropyl, cyclobutyl, cyclopentyl, cyclohexyl, cycloheptyl or cyclooctyl.

The term "heterocycle" denotes monovalent or bivalent non-aromatic mono- or bi-cyclic radical of four to nine ring atoms in which one to three ring atoms are heteroatoms independently selected from N, O and S(O)n (where n is 0, 1 or 2), with the remaining ring atoms being C. Particular is piperidyl or a cyclic carbonate.

The term "aryl" denotes a monovalent or bivalent aromatic carbocyclic group containing 6 to 14, particularly 6 to 10, carbon atoms and having at least one aromatic ring or multiple condensed rings in which at least one ring is aromatic. Examples include phenyl, benzyl, naphthyl, biphenyl, anthryl, azalenyl or indanyl.

The term "heteroaryl" denotes a monovalent or bivalent cyclic aromatic group containing 1, 2 or 3 heteroatoms, having at least one aromatic ring or multiple condensed rings in which at least one ring is aromatic. The aromatic ring may be a 6 membered ring, such as pyridinyl, or a 5-membered ring, such as thiazolyl, isoxazolyl, isothiazolyl, oxadiazolyl, imidazolyl, triazolyl or thiadiazolyl.

The formulation of the present invention comprises at least one multifunctional cyclic carbonate having at least two cyclic carbonate groups at the end of the chain (compound A), at least one preferably aliphatic, multifunctional amine (compound B), at least one masked thiol precursor (compound C) and optionally at least one catalyst (compound D).

Advantageously, the curable formulation of the invention is a liquid or a viscous liquid at ambient temperature (25 °C). Preferably, the viscosity of said curable formulation is lower than or equal to 20 000 mPa.s at 50°C, more preferably lower than 10 000 mPa.s at 50°C, most preferably lower than 5 000 mPa.s at 50°C as measured with an oscillatory rheometer, with oscillatory frequency sweep at 50°C, 5% deformation, 100-0.1 rad s⁻¹. In case the curable formulation is not a liquid or a viscous liquid at ambient temperature it is rendered liquid by heating to a temperature of between 40 and 80°C.

Compound A is chosen from multifunctional cyclic carbonates having at least two cyclic carbonates at the end of the chain (or so-called multifunctional external cyclic carbonates) or a mixture thereof. In general, said compounds A correspond to formula (I) 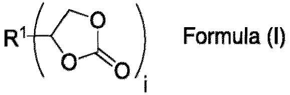 wherein
i is an integer higher than or equal to 2, in particular from 2 to 10, more particularly 2 or 3,
R¹ is a carbon bond between the cyclic carbonate rings or is a linear or branched hydrocarbon chain, which may be unsubstituted or substituted and wherein one or several hydrocarbon groups of said hydrocarbon chain may be replaced by a heteroatom, a ketone, a cycloalkyl, a heterocycle, an aryl or a heteroaryl, each of which may be unsubstituted or substituted, said hydrocarbon chain having at least 2 carbon atoms, in particular from 3 to 60 carbon atoms.

Suitable examples of compounds A for use in the present invention include the following:

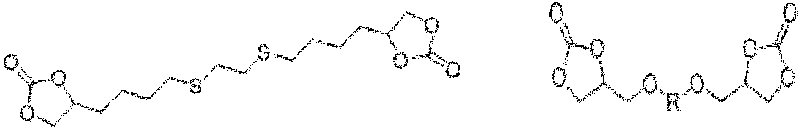

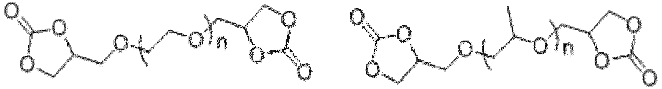

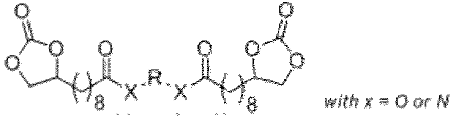

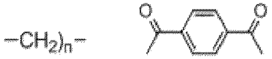

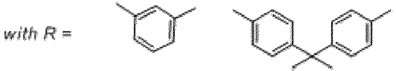

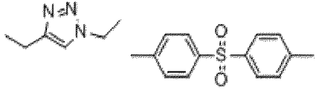

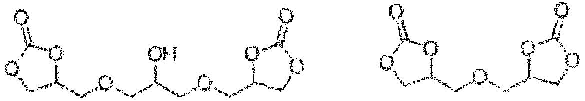

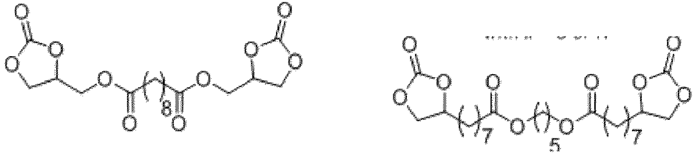

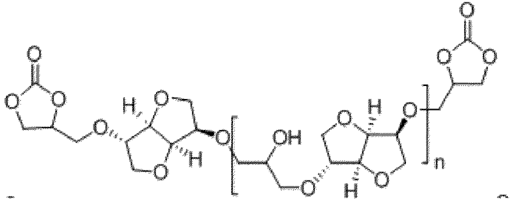

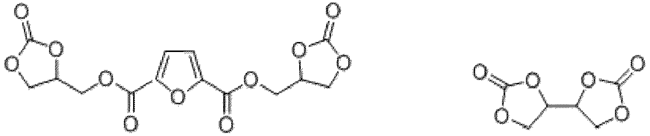

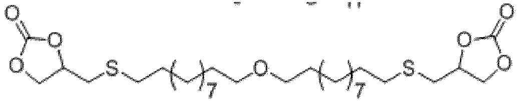

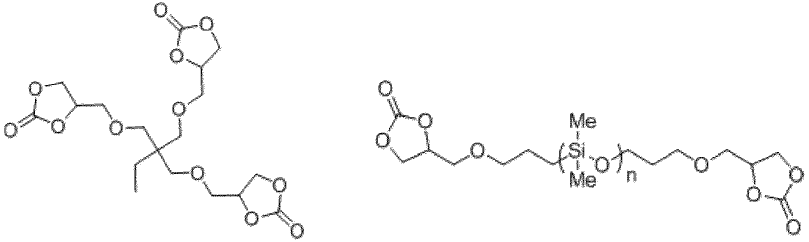

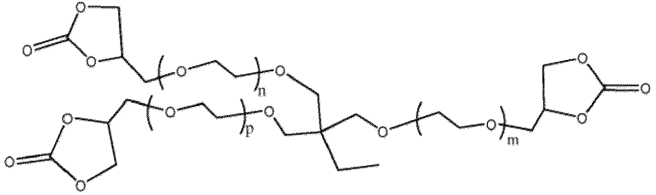

Particularly preferred compounds A are

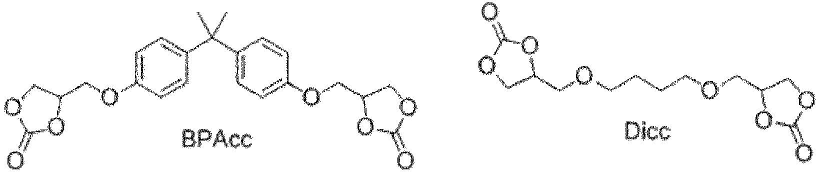

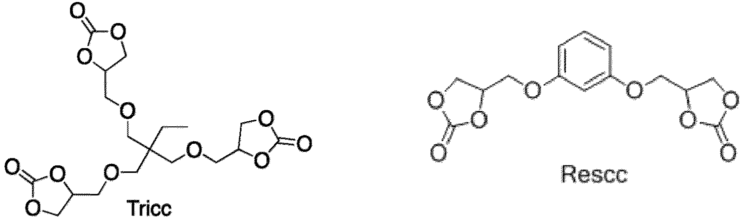

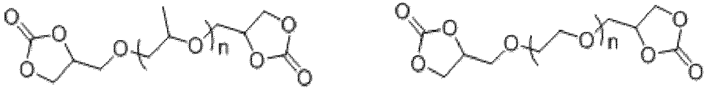

Compounds A can be prepared at large scale by any methods known in the art, for instance from polyols by converting all or part of the alcohol functions of said polyol into glydicylether functions, followed by carbonation of said glycidylether functions as described in EP 3 199 569, or by epoxidation of molecules bearing at least 2 external double bonds, followed by the (organo)catalyzed carbon dioxide coupling reaction as described by L.-N. He & al., "One-pot stepwise synthesis of cyclic carbonates directly from olefins with CO2 promoted by K2S2O8/NaBr", J. CO2 Util., 2016, 16, 313-317 and by R. Wang & al., "Direct Synthetic Processes for Cyclic Carbonates from Olefins and CO2", Catal. Surv. from Asia, 2011, 15, 49-54, and by C. Detrembleur & al., "Organocatalyzed coupling of carbon dioxide with epoxides for the synthesis of cyclic carbonates: catalyst design and mechanistic studies", Catal. Sci. Technol., 2017, 7, 2651.

Compound B is chosen from multifunctional amines or a mixture thereof. In general, said compounds B correspond to formula (II)

R²-(NHR')ⱼ Formula (II)

wherein
j is an integer higher than or equal to 2, in particular from 2 to 6,
R² is an aryl or a heteroaryl, each of which may be unsubstituted or substituted, or a linear or branched hydrocarbon chain, which may be unsubstituted or substituted, and wherein one or several hydrocarbon groups of said hydrocarbon chain may be replaced by a heteroatom, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms, and wherein R' each independently may be hydrogen, an alkyl or a cycloalkyl. R' is preferably a hydrogen, a methyl or an ethyl.

Compound B acts as a hardener by reacting with cyclic carbonate groups of compounds A, and optional compounds E and F as described hereinafter, thereby cross-linking the cyclic carbonate chains to each other.

Examples of suitable compounds B for use in the present invention include those amines which are classically used for epoxy curing, for instance diamines, in particular linear aliphatic diamines, such as 1,2-diaminoethane, 1,3-diaminopropane, butane-1,4-diamine, pentane-1,5-diamine, 1,6-diaminohexane, or 1,12-diaminododecane, or cyclic aliphatic diamines, such as isophoronediamine (IPDA), triamines, such as tris(2-aminoethyl)amine, or any other polyamines, such as polyethylene imine (e.g. Lupasol ^{®} FG from BASF) or dimeric fatty acid diamines such as Priamine ^{®} 1074 or Priamine^{®} 1071 from Croda, or Jeffamine^{®} (D, ED, EDR or T serie) from Huntsman Petrochemical, LLC, or aromatic diamine, such as o-xylylenediamine, m-xylylenediamine, *p*-xylylenediamine or 1,2-diphenylethylenediamine.

The use as compound B of multifunctional amines with long chain segments and/or a low number of -NH₂ functionalities (such as 1,6-diaminohexane or Priamine ^{®} 1074) will yield flexible foams, while the use of polyamines with short chain segments and/or a high number of -NH₂ functionalities (such as Lupasol ^{®} FG, isophorone diamine or m-xylylenediamine) will yield rigid foams.

Alternatively, secondary multifunctional amines can also be used instead of primary ones, or be used in combination with primary ones.

Particularly preferred compounds B are

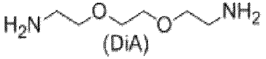

Compound C is chosen from masked thiol precursors, which may be monofunctional or polyfunctional or a mixture of one or more of such masked thiol precursors. The masked thiol precursor for use according to the present invention can be any compound in which the thiol functional group is initially masked but which can easily be formed in-situ. Preferably said masked thiol precursors are cyclic compounds. In general, said compounds C correspond to formula (III) or formula (IV) or formula (V) or formula (VI) 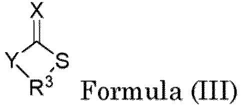 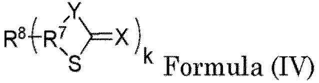 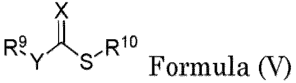 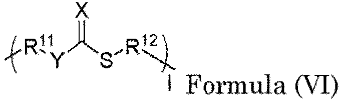 wherein
k is an integer higher than or equal to 2, in particular from 2 to 6,
1 is an integer higher than or equal to 2, in particular from 2 to 1000,
X is O or S,
Y is O, S, NR⁴, CR⁵R⁶,
R³ is a linear or branched hydrocarbon chain, which may be unsubstituted or substituted, and wherein one or several hydrocarbon groups of said hydrocarbon chain may be replaced by an aryl, a heteroatom, a ketone, an amide, an amine, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms, said hydrocarbon chain including carbon and hydrogen atoms wherein the carbon groups are linked through single or double bonds,
R⁴ is hydrogen or a linear or branched hydrocarbon chain, which may be unsubstituted or substituted, and wherein one or several hydrocarbon groups of said hydrocarbon chain may be replaced by an aryl, a heteroatom, a ketone, an amide, an amine, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms,
R⁵ and R⁶ are identical or different and are hydrogen or a linear or branched hydrocarbon chain, which may be unsubstituted or substituted, and wherein one or several hydrocarbon groups of said hydrocarbon chain may be replaced by an aryl, and heteroatom, a ketone, an amide, an amine, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms, R⁵ and R⁶ together may form a cyclic structure,
R⁷ is a linear or branched hydrocarbon chain, which may be unsubstituted or substituted, and wherein one or several hydrocarbon groups of said hydrocarbon chain may be replaced by an aryl, a heteroatom, a ketone, an amide, an amine, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms,
R⁸ is a linear or branched hydrocarbon chain, which may be unsubstituted or substituted, and wherein one or several hydrocarbon groups of said hydrocarbon chain may be replaced by a heteroatom, a ketone, an amide, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms, or R⁸ is a linear or branched polymeric group,
R⁹ and R¹⁰ are identical or different, and are a linear or branched hydrocarbon chain, which may be unsubstituted or substituted, and wherein one or several hydrocarbon groups of said hydrocarbon chain may be replaced by a heteroatom, a ketone, an amide, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms, or R⁹ or/and R¹⁰ is/are a linear or branched polymeric group,
R¹¹ and R¹² are identical or different, and are a linear or branched hydrocarbon chain, which may be unsubstituted or substituted, and wherein one or several hydrocarbon groups of said hydrocarbon chain may be replaced by a heteroatom, a ketone, an amide, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms.

Examples of suitable compounds C for use in the present invention include thiolactones (e.g. *N*-acetylhomocysteine thiolactone, γ-thiobutyrolactone, homocysteine thiolactone, 2,4(3H,5H)-thiophenedione, homocysteine thiolactone hydrochloride, erdosteine, tetrahydro-2H-thiopyran-2-one, 2(5*H*)-thiophenone), linear thioesters (e.g. ethyl thioacetate, *S*-methyl thioacetate, furfuryl thioacetate, *S*-phenyl thioacetate), linear or cyclic monothiocarbonates (e.g. S-methyl-O-methyl monothiocarbonate, benzyl S-phenyl thiocarbonate, 1,3-oxathiolan-2-one, 1, 3-oxathian-2-one), linear or cyclic dithiocarbonates (e.g. *S*,*S*'-dimethyl dithiocarbonate, dithiocarbonic acid S-ethyl ester-o-benzyl ester, O-benzyl S-methyl dithiocarbonate, S,S-diphenyl dithiocarbonate, 1,3-oxathiolane-2-thione, 1,3-oxathiane-2-thione), linear or cyclic trithiocarbonates (e.g. trithiocarbodiglycolic acid, dimethyl trithiocarbonate, *S*-(2-cyanoprop-2-yl)-*S*-dodecyltrithiocarbonate, S,S-dibenzyl trithiocarbonate, 2-(dodecylthiocarbonothioylthio)-2-methylpropionic acid, 1,3-dithiole-2-thione, 1,3-dithiane-2-thione), linear or cyclic S-thiocarbamates (e.g. S-ethyl N-ethylthiocarbamate, S-methyl N-phenylcarbamothioate, molinate, 2-thiazolidinone, 3-methyl-2-thiazolidinone, tetrahydro-2*H*-1,3-thiazin-2-one), linear or cyclic xanthates, poly(thioester)s, poly(monothiocarbonate)s, poly(dithiocarbonate)s, poly(trithiocarbonate)s. Compound C can also be a telechelic, branched or multiarms polymer bearing a masked thiol precursor at each chain-end (such as polyethylene glycol thiolactone or polyethylene glycol thioester) or along the polymer backbone as pendant or internal groups. Examples of polymers containing masked thiol precursors as pendant groups can be any copolymers of thiolactones bearing an olefin (e.g. N-thiolactone acrylamide) with any vinyl monomers (e.g. (meth)acrylates, (meth)acrylamides, acrylonitrile, styrene, butadiene, isoprene, ethylene, vinyl esters, vinyl amides).

Examples of suitable compounds C for use in the present invention are

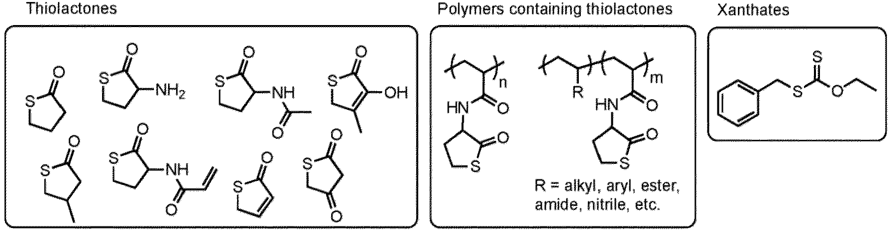

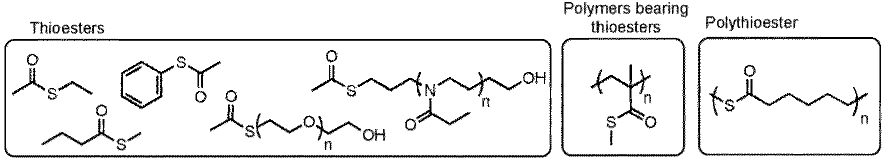

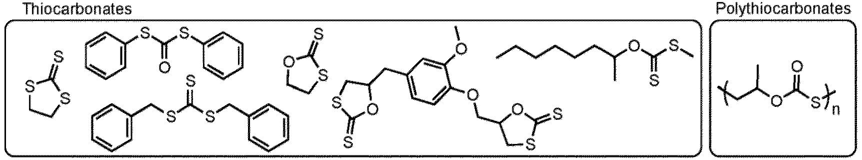

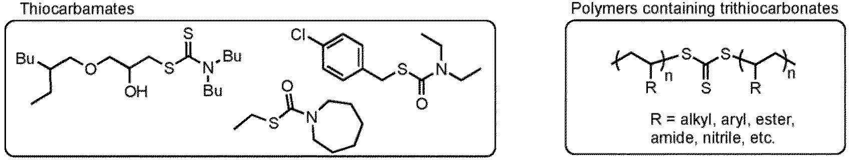

Particularly preferred compounds C are

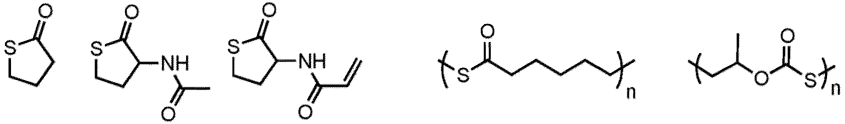

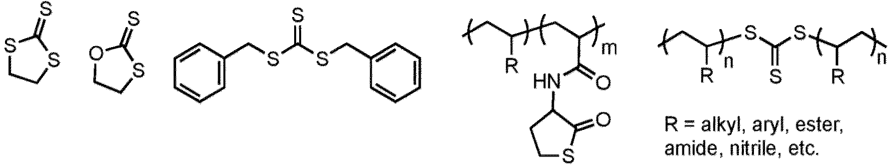

Optional compound D, the catalyst, is used to increase the kinetics of the carbonate/amine reaction (thus the formation of NIPU) and the decarboxylation of the cyclic carbonate and thus the foaming. In most cases it will be preferred to add a catalyst to accelerate the curing and foaming of the formulation and to obtain a more expanded foam. But suitable foams can also be obtained in some cases without using a catalyst.

A wide range of catalysts can be used (see for instance Blain et al., Green Chemistry 2014, 16, 4286). The choice of suitable catalyst depends on the specific formulation used but also on the temperature used to form the foam. As non-limiting examples, compound D can be chosen from amine catalysts, such as triazabicyclodecene (TBD), 1,4-diazabicyclo[2.2.2]octane (DABCO), 1,8-diazabicyclo[5.4.0]undec-7-ene (DBU), 7-methyl-1,5,7-triazabicyclo[4.4.0]dec-5-ene (MTBD), or other guanidines and amidines, trimethylhydroxyethyl ethylene diamine, trimethylaminopropylethanolamine, dimethylethanolamine, bis(2-dimethylaminoethyl) ether, triethylenediamine, dimethylaminocyclohexane, N-methyl morpholine, dimethylaminopyridine (DMAP), triethylamine (NEt₃), trimethylamine, phosphazenes, phosphines (triaryl and trialkylphosphines).

The compound D may also be chosen from ionic salts or ionic liquids composed of a combination of a cation and an anion. The cation may be selected from alkali metals such as Na⁺, Li⁺, K⁺, Cs⁺ or other metal such as Mg²⁺, Ca²⁺ or organic cations including ammonium (formula 1), phosphonium (formula 2), imidazolium (formula 3), pirazolium (formula 4), triazolium (formula 5), tetrazolium (formula 6), pyridinium (formula 7), piperidinium (formula 8), pyrrolidinium (formula 9), guanidinium (formula 10) or amidinium (formula 11). 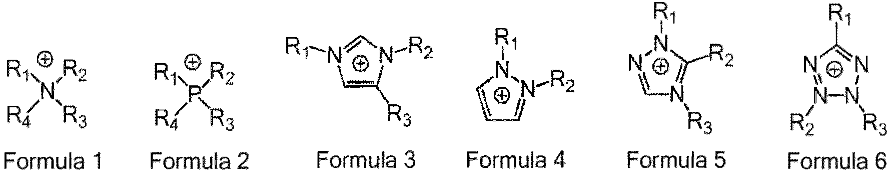 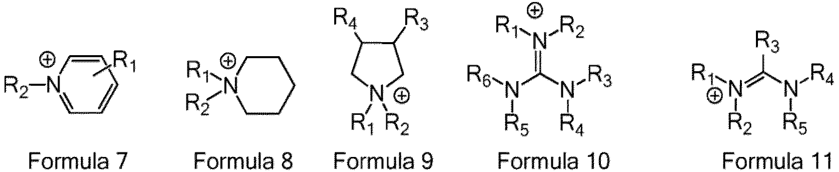 wherein:
R₁, R₂, R₃, R₄, R₅ and/or R₆ is independently a hydrogen or an aromatic ring or linear or branched hydrocarbon chain, one or several carbon atoms of which may be replaced with a heteroatom, a cycloalkyl or a heterocycle, said hydrocarbon chain having at least 1 carbon atom, in particular from 1 to 60 carbon atoms, more particularly from 1 to 20 carbon atoms, even more particularly from 1 to 10 carbon atoms.

The anion may be selected from halide (I⁻, Br⁻, or Cl-), carbonate (CO₃²⁻ ), hydrogenocarbonate (HCO₃⁻), hydroxide (OH⁻), carboxylate (formula 12) or dicarboxylate (such as oxalate), phosphate (PO₄³⁻), hydrogeno phosphates (HPO₄²⁻, H₂PO₄⁻), phenolate (formula 13), catecholate (formula 14), pyrogallolate (formula 15), boronate (formula 16), imidazolide (formula 17). 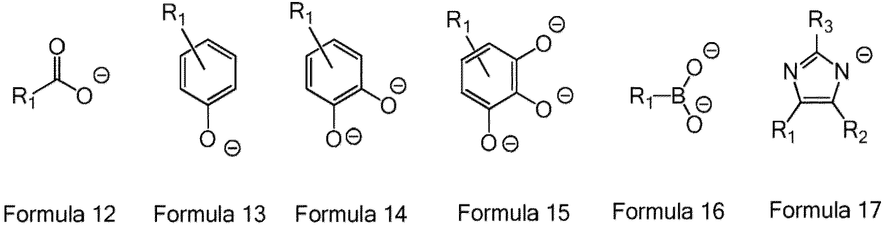 wherein:
R₁, R₂ and/or R₃ is independently a hydrogen or an aromatic ring or linear or branched hydrocarbon chain, one or several carbon atoms of which may be replaced with a heteroatom, a cycloalkyl or a heterocycle, said hydrocarbon chain having at least 1 carbon atoms, in particular from 1 to 60 carbon atoms, more particularly from 1 to 20 carbon atoms, even more particularly from 1 to 10 carbon atoms.

Other suitable compounds D include metal salts of inorganic acid or organometallic catalysts such as stannous octoate, lead octoate, dibutyltin dilaurate, potassium acetate or potassium ethyl-hexoate, or mixtures thereof. Further suitable compounds D include phosphines such as triarylphosphines and monoalkylbiarylphosphines, bases, thioureas, phosphazenes, carbenes or masked carbenes (as described by Taton et al in "N-Heterocyclic carbenes (NHCs) as organocatalysts and structural components in metal-free polymer synthesis", Chem. Soc. Rev. 2013, 42, 2142).

Mixtures of several different catalysts, of the same class or not, may also be used.

Particularly preferred catalysts for use as compound D in the present invention are 1,8-diazabicyclo[5.4.0]undec-7-ene (DBU), tetrabutyl ammonium oxalate, tetrabutyl ammonium phenolate (TBAP), potassium carbonate, cesium carbonate and potassium phosphate (mono, di or tribasic forms).

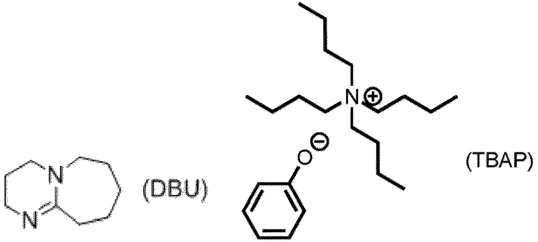

Optionally the formulation of the present invention may further contain any one of or a mixture of monofunctional cyclic carbonate (compound E), multifunctional cyclic carbonates having at least two cyclic carbonate groups within the chain (compound F), monofunctional thiols (compound G), multifunctional thiols (compounds H) and polyepoxides (compound I). Compound E generally acts as a reactive diluent and is chosen from monofunctional cyclic carbonates or a mixture thereof, which preferably correspond to formula (VII) or a mixture thereof. 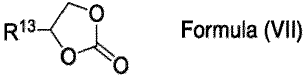 wherein
R¹³ is hydrogen or an aryl or a linear or branched hydrocarbon chain, which may be unsubstituted or substituted e.g. with a functional group such as an alcohol, a secondary or tertiary amine, a carboxylic acid, an alkene, an ester, etc. and wherein one or several hydrocarbon groups of said hydrocarbon chain may be replaced by a heteroatom, a cycloalkyl, and aryl or a heterocycle, each of which may be unsubstituted or substituted, said hydrocarbon chain having at least 1 carbon atom, in particular from 2 to 60 carbon atoms, more particularly from 2 to 20 carbon atoms, even more particularly from 2 to 15 carbon atoms.

Suitable examples of compounds E for use in the present invention are ethylene carbonate, propylene carbonate, 4-vinyl-1,3-dioxolan-2-one, etc.

Compound F contributes to the formation of the NIPU matrix; due to sterical hindrance by the internal cyclic carbonates it reacts more slowly than compound A. Compound F is chosen from multifunctional internal cyclic carbonates thus having at least two cyclic carbonate groups within the chain (so-called internal cyclic carbonates) or any mixture thereof. Compound F may correspond to any one of formula (VIII), (IX) and (X) or a mixture thereof. 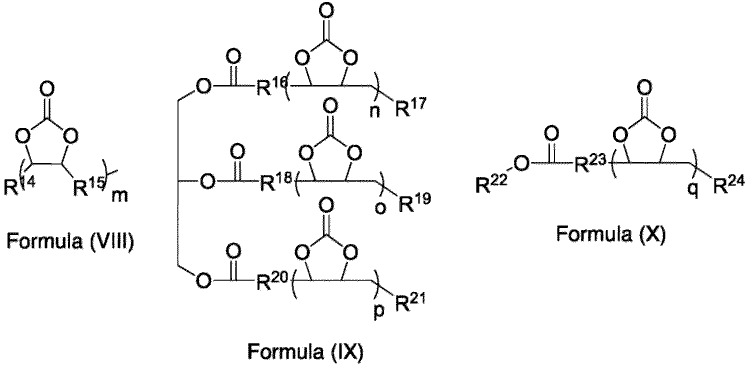 wherein:
m and q are integers higher than or equal to 2, in particular from 2 to 6,
n, o and p are integers higher than or equal to 1,
R¹⁴ is a linear or branched hydrocarbon chain, which may be unsubstituted or substituted and wherein one or several hydrocarbon groups of said hydrocarbon chain may be replaced by a heteroatom, a ketone, a cycloalkyl or a heterocycle, an aryl or a heteroaryl, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms,
R¹⁵ is a linear hydrocarbon chain, which may be unsubstituted or substituted and wherein one or several hydrocarbon groups of said hydrocarbon chain may be replaced by a heteroatom, a ketone, a cycloalkyl or a heterocycle, an aryl or a heteroaryl, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms, and wherein R¹⁵ may form a ring structure with R¹⁴,
R¹⁶, R¹⁷, R¹⁸, R¹⁹, R²⁰, R²¹, R²³ and R²⁴ each independently is a linear hydrocarbon chain, said hydrocarbon chain having at least 2 carbon atoms, in particular from 2 to 60 carbon atoms, more particularly from 2 to 20 carbon atoms, even more particularly from 2 to 15 carbon atoms,
R²² is hydrogen or a linear or branched hydrocarbon chain, said hydrocarbon chain having at least 1 carbon atom, in particular from 1 to 5 carbon atoms, more particularly from 1 to 3 carbon atoms.

Compound F are all molecules containing internal cyclic carbonates that can be prepared by all methods known by the art such as by the (organo)catalyzed coupling of carbon dioxide to epoxidized vegetable oils or fatty esters/acids or to diols derived from instance from sugars. Partially cyclocarbonated epoxidized vegetable oils or fatty acid/esters can also be used. Examples of suitable compounds F are:

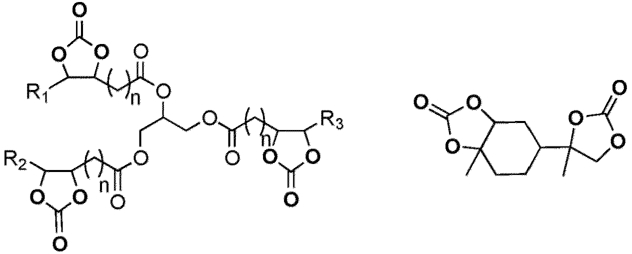

Compound G also reacts with the cyclic carbonate to generate CO₂ but will not crosslink the matrix due to its monofunctionality and allows to graft interesting groups to NIPU. Compound G is chosen from monofunctional thiol or any mixture thereof, and preferably corresponds to formula (XI)

R²⁵-SH Formula (XI)

wherein:
R²⁵ is an aryl group which may be unsubstituted or substituted or a linear of branched polymeric group or a polydialkyl siloxane chain or a linear or branched hydrocarbon chain which may be unsubstituted or substituted e.g. with a functional group such as alcohol, primary, secondary or tertiary amine, carboxylic acid, ester, etc., and wherein one or several hydrocarbon groups of said hydrocarbon chain may be replaced with an aryl, a heteroatom, a ketone, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms.

Compound G can be any monofunctional thiol but monofunctional thiol of high boiling point is preferred. Thioamines such as cysteamine or cysteine are also preferred because the thiol group contributes to the formation of the blowing agent and to the formation of the thioether linkage, and the amine group contributes to the formation of the urethane linkage.

Compound H is chosen from multifunctional thiols or a mixture thereof. In general, said compounds H correspond to formula (XII)

R²⁶(-SH )ᵣ Formula (XII)

wherein
r is an integer higher than or equal to 2, in particular from 2 to 6,
R²⁶ is a linear or branched hydrocarbon chain, which may be unsubstituted or substituted, and wherein one or several hydrocarbon groups of said hydrocarbon chain may be replaced by a heteroatom, a ketone, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms, or R²⁶ is a linear or branched polymeric group.

Examples of suitable compounds H for use in the present invention include bi-thiols, tri-thiols, tetra-thiols or hexa-thiols, preferably pentaerytrittetrathiol, thiol trimethylol propane, tris[2-(3-mercaptopropionyloxy)ethyl] isocyanurate, pentaerythritol tetra (3-mercaptopropionate), trimethylolpropane tri (3-mercaptopropionate), pentaerythritol tetrathioglycolate and/or trimethylolpropane thioglycolate, tris [2-(3-mercaptopropionyloxy)ethyl] isocyanurate. Compound H can also be a telechelic, branched or multiarms polymer bearing thiol groups at each chain-end (such as polyethylene glycol dithiol or polypropylene glycol dithiol) or along the polymer backbone as pendant groups, or a peptide or protein containing at least two thiols, or kraft lignin.

Particularly preferred compounds H, which also have the benefit of having almost no odor, are

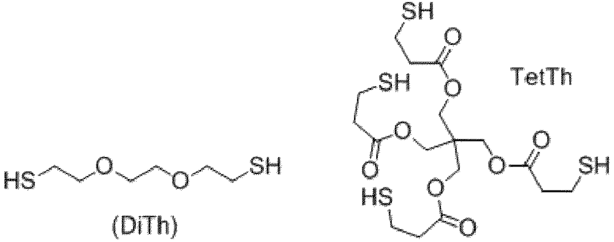

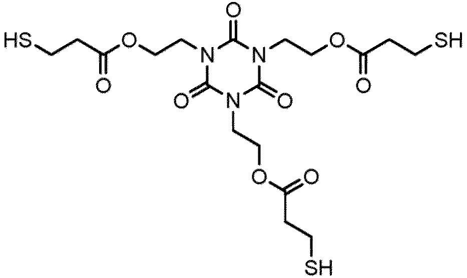

Compound I is chosen from polyepoxides or a mixture thereof and will contribute to the crosslinking of the material. Preferably compound I corresponds to any one of formula (XIII), (XIV), (XV) or (XVI). 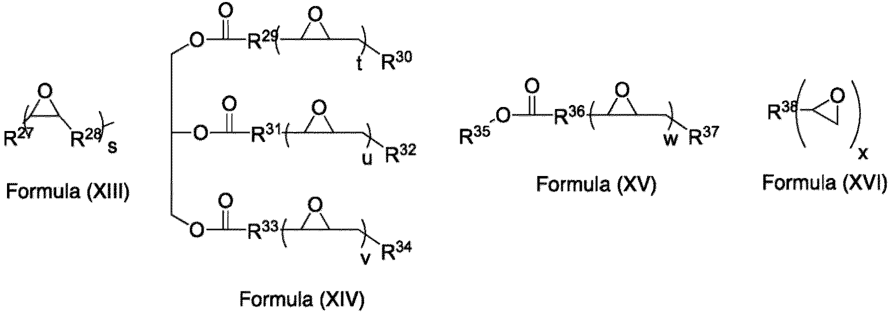 wherein:
x is an integer higher than or equal to 2, in particular from 2 to 10,
s and w are integers higher than or equal to 2, in particular from 2 to 6,
t, u and v are integers higher than or equal to 1,
R²⁷ is a linear or branched hydrocarbon chain, which may be unsubstituted or substituted, and wherein one or several hydrocarbon groups which may be replaced by a heteroatom, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms,
R²⁸ is a linear hydrocarbon chain, one or several hydrocarbon groups of which may be replaced by a heteroatom, a cycloalkyl or a heterocycle, said hydrocarbon chain having at least 2 carbon atoms, in particular from 2 to 60 carbon atoms, more particularly from 2 to 20 carbon atoms, even more particularly from 2 to 15 carbon atoms,
R²⁹, R³⁰, R³¹, R³² R³³ R³⁴ R³⁶ and R³⁷ each independently is a linear hydrocarbon chain, said hydrocarbon chain having at least 2 carbon atoms, in particular from 2 to 60 carbon atoms, more particularly from 2 to 20 carbon atoms, even more particularly from 2 to 15 carbon atoms,
R³⁵ is hydrogen or a linear or branched hydrocarbon chain, said hydrocarbon chain having at least 1 carbon atom, in particular from 1 to 5 carbon atoms, more particularly from 1 to 3 carbon atoms,
R³⁸ is a linear or aryl or branched hydrocarbon chain, one or several hydrocarbon groups of which may be replaced by a heteroatom, a cycloalkyl, a heterocycle, an aryl or a heteroaryl, said hydrocarbon chain having at least 3 carbon atoms, in particular from 3 to 60 carbon atoms, or a polydimethylsiloxane chain or block copolymer containing one polydimethylsiloxane sequence such as poly(ethylene oxide)-b-poly(dimethylsiloxane).

Examples of suitable compounds I are polyepoxides that are used in formulations for epoxy resins, such as epoxidized linseed oil, epoxidized soybean oil, epoxidized rapeseed oil, epoxidized tall oil, or epoxidized peanut oil, poly(dimethyl siloxane) diepoxide, cyclohexane-1,4-dicarboxylic acid-diglycidylester, cyclohexane-1,3-dicarboxylic acid-diglycidylester, cyclohexane-1,2-dicarboxylic acid-diglycidylester, phthalic acid-diglycidylester, isophthalic acid-diglycidylester, terephthalic acid-diglycidylester, norbornenedicarboxylic acid-diglycidylester, 3,4-epoxycyclohexylmethyl-3,4-epoxycyclohexanecarboxylate, Bis((3,4-epoxycyclohexyl)-methyl)adipate, 4,5-epoxytetrahydrophthalic acid-diglycidylester and 4,4'-methylenebis(N,N-diglycidylaniline). Further suitable polyepoxides are aromatic diglycidylether, cyclohexane-1,4-dimethanol-diglycidylether, cyclohexane-1,2-dimethanol-diglycidylether, Bisphenol-A-diglycidylether, Bisphenol-F-diglycidylether, Bisphenol-S-diglycidylether, N,N-di-glycidyl-4-glycidyloxyaniline, 4,4'-methylene-bis(N,N-diglycidylaniline), 1,4-cyclohexanedimethanol-bis(3,4-epoxycyclohexanecarboxylate), epoxidized cycloolefine such as vinylcyclohexene-dioxide and dicyclopentadiene-dioxide, epoxy functional poly(dimethylsiloxane) (such as TEGOMER E-SI 2330 sold by Evonik), epoxy functional (polyethylene glycol), epoxy functional (polypropylene glycol).

Some specific examples of compound I are illustrated below.

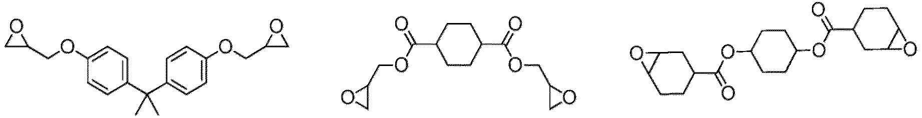

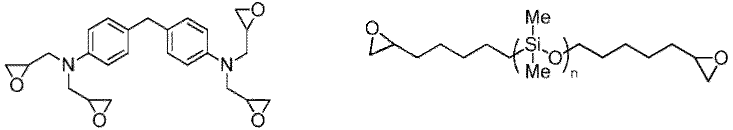

A particularly preferred compound I is

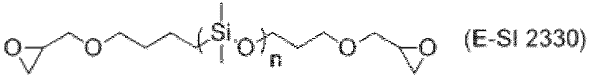

The amount of compound A generally ranges from 18 wt% to 80 wt%, in particular from 40 wt% to 70 wt %, more in particular from 40 to 60 wt%, the percentage being expressed relative to the total weight of the formulation.

The amount of compound B generally ranges from 10 wt% to 80 wt%, in particular from 10 to 70 wt%, more in particular from 10 wt% to 50 wt %, the percentage being expressed relative to the total weight of the formulation.

The amount of compound C generally ranges from 1 wt% to 60 wt%, in particular from 2 to 40 wt%, more in particular from 5 to 20 wt %, the percentage being expressed relative to the total weight of the formulation.

The molar ratio between compound A, compound B and compound C will affect the foaming of the formulations and the properties of the obtained foams. According to a preferred embodiment of the present invention an equimolar amount of cyclic carbonate groups (from compound A) and amine groups (from compound B) is used. The molar ratio of masked thiol groups (from compound C) is preferably between 10 and 50 mol% with respect to the cyclic carbonate groups (from compound A). Other ratios can be used to modulate the foam properties.

If present, the amount of compound D generally ranges from 0.1 wt% to 15 wt%, in particular from 0.5 wt% to 7 wt %, the percentage being expressed relative to the total weight of the formulation.

The amount of compound E generally ranges from 0 wt% to 50 wt%, in particular from 1 wt% to 50 wt%, more in particular from 5 wt% to 10 wt %, the percentage being expressed relative to the total weight of the formulation.

The amount of compound F generally ranges from 0 wt% to 50 wt%, in particular from 1 wt% to 50 wt%, more in particular from 2 wt% to 20 wt %, the percentage being expressed relative to the total weight of the formulation.

The amount of compound G generally ranges from 0 wt% to 50 wt%, in particular from 1 wt% to 50 wt%, more in particular from 2 wt% to 10 wt %, the percentage being expressed relative to the total weight of the formulation.

The amount of compound H generally ranges from 0 wt% to 50 wt%, in particular from 1 wt% to 20 wt%, more in particular from 2 wt% to 10 wt %, the percentage being expressed relative to the total weight of the formulation.

The amount of compound I generally ranges from 0 wt% to 50 wt%, in particular from 0.1 wt% to 50 wt%, more in particular from 0.5 wt% to 20 wt %, the percentage being expressed relative to the total weight of the formulation.

The formulation of the present invention is obtained by mixing the ingredients, compounds A, B, C, optionally D and further optionally E, F, G, H and I at a temperature of between 15 and 120°C, preferably between 25 and 80°C, and more preferably between 25 and 60°C. The mixing can be performed using any suitable mixing equipment, including static mixing equipment, impingement mixing equipment, or other suitable mixing equipment.

Although CO₂ blowing agent is generated in-situ the formulation of the present invention may contain additional chemical or physical blowing agent. In particular physical blowing agent may be added, especially when NIPU foams with high thermal insulation performance are targeted. Examples of such suitable physical blowing agents include any of the physical blowing agents used to formulate thermal insulating foams such as alkanes (e.g. pentane), cycloalkanes (e.g. cyclopentane) and hydrofluoroalkanes. A preferred nonflammable liquid hydrofluorocarbon with no ozone depletion potential is Solkane 365/227 or Solvokan. The amount of these additional blowing agents ranges from 0 wt% to 70 wt%, preferably between 10 wt% and 30 wt%, the percentage being expressed relative to the weight of the formulation. These blowing agents are added to the formulation containing all the other ingredients generally at a temperature between 10 to 30°C in order to avoid complete vaporization of the blowing agent before effective mixing with the reaction mixture.

The formulation may further contain optional ingredients such as plasticizers, organic and/or inorganic fillers, colorants, preservatives, odor masking agents, flame retardants, smoke suppressants, thixotropic agents, mould release agents, surfactants, foam stabilizers, biocides, antioxidants, UV stabilizers, antistatic agents or foam cell nucleators.

Stabilizers may be used to stabilize the NIPU foams. Suitable stabilizers are reactive polydimethylsiloxane and polyethylene oxide. Fillers may also be added, such as silica, clays, cellulose nanowhiskers, carbon black, carbon nanotubes, graphene, etc. The addition of fillers may advantageously create nucleation nodes for the control of the foam density and size distribution of the cells (from a few nm to 1-2 mm). Fillers may also improve the mechanical performance of the foams. Foams containing fillers are referred to as nanocomposite foams. Fillers can be functionalized by appropriate reactive groups such as epoxides, amines, cyclic carbonates, masked thiol precursors or thiols making them reactive.

Inorganic or organic fillers may also be used to catalyse the foaming reaction. Inorganic or organic fillers may advantageously play such a role of catalysis in addition to one or more of the roles mentioned here above. An example of a filler which may play such additional role of catalysis is hydrotalcite (Mg₆Al₂(CO₃)(OH)₁₆ .4H₂O).

The mechanical performance of the foams (from flexible to rigid materials) may also be adjusted by selecting suitable structure of cyclic carbonates (compounds A, E, F) and/or amines (compound B) and/or thiols (compounds G and H) and/or polyepoxides (compound I).

According to the invention, the blowing agent is formed by decarboxylation of cyclic carbonates (compounds A, E and F) by masked thiol precursors (compound C) in the presence of amines (compounds B) and optionally a catalyst (compound D). The amine is reacting with the masked thiol precursor to provide a thiol function and an additional chemical linkage, the latter depends on the structure of the masked thiol precursor. The reaction of the in-situ formed thiol with the cyclic carbonate yields the blowing agent (carbon dioxide) that creates holes in the polymer matrix, thereby producing a cellular structure. Beside the production of the blowing agent, this reaction leads also to the formation of thioether links. The formation of the different linkages is illustrated in the following general reaction scheme for a representative masked thiol precursor and can be adapted to other masked thiol precursors described in the invention:

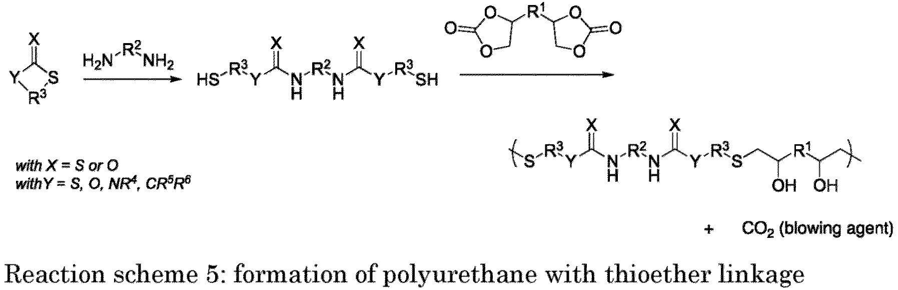

This reaction therefore leads to the chemical anchoring of the masked thiol precursor to the polymer chain and contributes to the crosslinking of the polymer. This is particularly important for the mechanical properties of the final materials but also for avoiding the diffusion of the masked thiol precursor within the polymer matrix after the foam preparation. The formation of the blowing agent generally occurs at a temperature of between 25°C and 200°C, preferably between 40 and 150°C and more preferably between 60 and 120°C.

According to another aspect of the present invention a process for preparing a self-blowing non-isocyanate polyurethane foam is provided comprising the steps of providing a formulation as described above by mixing compounds A, B, C and optionally other additives, optionally in the presence of compound D so as to form a viscous mixture and curing said formulation so as to promote the formation of CO₂ and form a non-isocyanate polyurethane foam.

The curing and the expansion of the polymer matrix occur simultaneously and can be achieved within a relatively short time after the mixing of the ingredients (between 10 seconds to 24 hours) and leads to a homogeneous foam. Although the foaming can be fast (1 min to few hours), the expanded reaction mixture can be cured for a longer time (2 to 24 h) by heating until it is in tack free state. Curing to a tack-free state generally takes place within few minutes, such as within 5 minutes, to few hours such as from to 2 to 4 hours. It should be understood that the time can be dependent on the temperature and vice-versa.

The curing and expansion generally occurs at a temperature of between 25°C and 200°C, preferably between 40 and 150°C and more preferably between 60 and 120°C.

Optionally, compounds E, F, G, H and/or I can be added to the ingredients in the first step of the process in order to adjust the viscosity of the mixture and/or the final properties of the foam. These compounds may be added independently from each other or may be added in the form of a mixture.

According to another embodiment of the present invention the process for preparing a self-blowing non-isocyanate polyurethane foam comprises the steps of mixing compounds A and B optionally in the presence of compound D so as to form a viscous mixture, partially curing said mixture so as to form a non-isocyanate polyurethane viscous prepolymer, adding compound C to said prepolymer and curing said mixture so as to form a non-isocyanate polyurethane foam. Optionally, compounds E, F, G, H and/or I can be added to the ingredients in the first step of the process or in step 3 wherein compound C is added in order to adjust the viscosity of the mixture and/or the final properties of the foam.

By partially curing is here meant the increase of viscosity of the formulation. The viscosity may for example be increased by a factor 10, by a factor 100, or even by a factor 1000 depending on the time and temperature of pre-curing as well as on the ingredients mixed. It also means that compounds A and B may start to be cross-linked. After partially curing, it is still possible to mix the compounds and/or to add a further compound. Such mixing after a partially curing may be a manual mixing or a mechanical mixing. The viscosity may be obtained by rheological measurements for example.

According to a further embodiment of the present invention the process involves mixing compounds A and B in the presence of compound C so as to form a viscous mixture, partially curing said mixture so as to form a viscous prepolymer, optionally adding compound D to said prepolymer mixture and curing said mixture so as to promote the formation of CO₂ and form a non-isocyanate polyurethane foam. Optionally, compounds E, F, G, H and/or I can be added to the ingredients in the first step of the process in order to adjust the viscosity of the mixture and/or the final properties of the foam.

The formation of the prepolymer occurs by curing generally at a temperature of between 25°C and 200°C, preferably between 25 and 150°C and more preferably between 40 and 120°C. This step is stopped before the polymer is fully crosslinked, thus when the mixture remains viscous. Because the polymer is not fully crosslinked, it is still possible to add a compound and/or to mix the formulation.

Compound C is added and mixed to the ingredients generally at a temperature between 15 and 120°C, preferably between 20 and 80°C and more preferably between 25 and 60°C.

The final curing and expansion of the foam generally occurs at a temperature between 25°C and 200°C, preferably between 40 and 150°C and more preferably between 60 and 120°C.

The process of the present invention provides the following advantages: no by-products are formed, no volatile organic compounds are released, no organic solvents are used, a broad diversity of masked thiol precursors is available. Further the present process is compatible with existing manufacturing processes for conventional PU foaming and is tolerant to air, water or other moisture.

The process of the invention provides polyurethane foam contains both urethane and thioether linkages, but also additional linkages with a nature that depends on the masked thiol precursor (see reaction schemes 4 and 5). The contents of the different linkages are fixed by the content of amine, cyclic carbonate, masked thiol precursor and optionally the thiol used in the formulation.

The process of the invention makes it possible to prepare flexible and rigid foams over a wide range of densities, of high density (higher than 80 kg/m³) or of low density (lower than or equal to 80 kg/m³, the density can be less than 800 kg/m³, in particular from 10 kg/m³ to 400 kg/m³, or from 20 kg/m³ to 200 kg/m³.

The foam pore sizes are generally lower than 5000 µm, in particular lower than 1000 µm.

Preferably, the foams of the invention have a glass transition temperature from -40°C to 200°C.

The compression modulus of the foams of the invention can be from 0.005 MPa to 1000 MPa, in particular from 0.02 MPa to 200 MPa. The compression modulus is measured on an instron machine (5566) in compression mode at a rate of 1 mm/min. The slope of the strain/stress curve in the elastic regime is used to calculate the compression modulus.

The NIPU foams according to the present invention can be used in any sector wherein traditional PU foams can be used, for example in the automotive, aeronautic, building, housing, footwear and health sector. Suitable applications include sandwich panels for thermal insulation (building and transportations insulations) and/or acoustic insulation foams for wellness (mattress, furniture, seats, cars), gasket in foam/adhesion joints for sealing (concrete, glass, metals, wood), joints for car or building windows and for fixing solar cell panels, or as air filters for indoor air purification.

The viscous reactive and/or curable formulations of the present invention may be applied onto various substrates (metal, wood, glass, textiles...) using syringes or sprayers. The present formulations may also be used with continuous reactive extrusion-foaming or in reactive injection-molding. The formulation of the present invention may also be sprayable and cured in a second step. The formulation of the present invention may also be used for 3D printing for the construction of 3D foamed materials.

According to another aspect of the present invention, a process for recycling the obtained polyurethane foam is provided by compression molding or extrusion.

The NIPU foams according to the present invention can be easily recycled or repurposed to give them another life. The NIPU foams can be reprocessed by compression molding under thermal treatment or by extrusion (molding). Optionally, a previous grinding step may be performed before such compression molding or extrusion.

The reprocessing temperature of NIPU foams is generally between 100 and 250°C, preferably between 120 and 200°C, and more preferable between 140 and 180°C.

Advantageously, the recycling process, also referred to as reprocessing, is possible without any solvent addition and/or without any metallic reagents.

According to another aspect of the present invention, a recycled polyurethane foam is provided by said recycling process.

Using these processes, the recycled foams subsequently can be processed as films, coatings, adhesives, fibres or as bulk materials by conventional processing techniques well-known by person of the art. Mixtures of NIPU foams of different properties can also be used to produce novel NIPU materials by applying the processing techniques described above. Their properties can be easily modulated by the nature of the NIPU foams that are mixed and by their content/composition.

The invention is illustrated by but not limited to the following examples.

### LIST OF FIGURES

Figure 1 shows a picture of the foams as obtained in Example 1A, 1B and 1C, respectively
Figure 2 shows SEM images of the foams as obtained in Example 1A, 1B and 1C, respectively
Figure 3 shows a picture of the foam obtained in Example 2
Figure 4 shows a picture of the foam obtained in Example 3
Figure 5 shows a picture of the foam obtained in Example 4
Figure 6 show SEM images of the foams obtained in Example 5
Figure 7 shows SEM images of NIPU foams recycled as films in Example 5
Figure 8 shows SEM images of NIPU foams recycled as coated fabric in Example 6.

### EXAMPLES

In the following examples foams were produced using the following compounds:

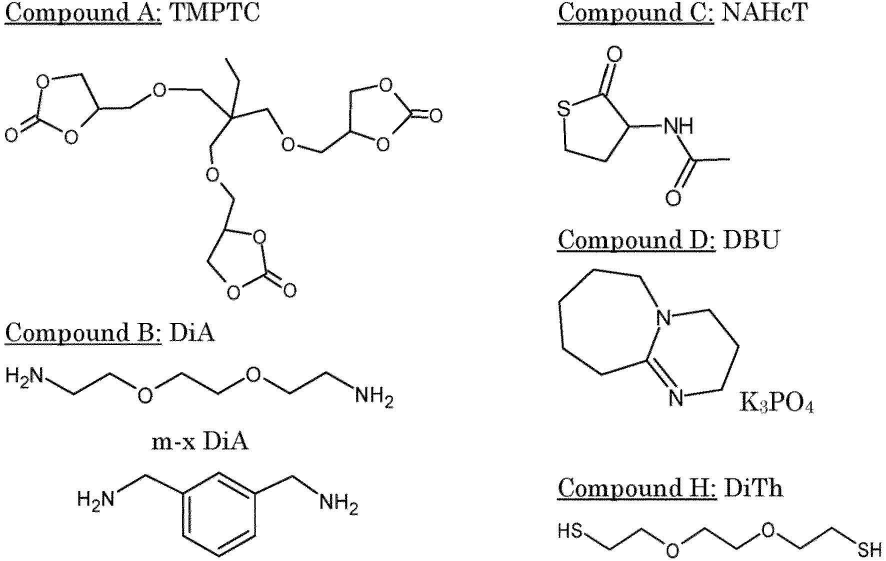

The average density of the foams is evaluated by weighting three foamed cubic samples with dimension of 10 x 10 x 10 mm.

Example 1: Comparison of foams produced with a masked thiol precursor according to the invention and with thiol of the prior art.

Example 1A: Foaming with a masked thiol precursor in the absence of a thiol. A mixture of compound A (TMPTC), compound B (DiA), compound C (NAHcT) and compound D (DBU) was placed in a polypropylene beaker and stirred at room temperature for 2 minutes. Then the reactive mixture was poured in a silicon mold and placed in an oven at 80°C. After 5 minutes at 80°C, the mixture was stirred a last time for 2 minutes and then placed again in the oven at 80°C. After 2h at 80°C, 30 minutes of temperature increase until 100°C and 1h at 100°C, a foam was obtained with an average density of 221 ± 4 Kg/m³.

| Compound | Structure | Content | Weight % |
|---|---|---|---|
| A | TMPTC | 5 g | 54.4 |
| B | DiA | 2.559 g | 27.8 |
| C | NAHcT | 1.374 g | 14.9 |
| D | DBU | 0.258 g | 2.8 |

Example 1B: Foaming with a masked thiol precursor in the presence of a thiol. A mixture of compound A (TMPTC), compound B (DiA), compound C (NAHcT), compound H (DiTh) and compound D (DBU) was placed in a polypropylene beaker and stirred at room temperature for 2 minutes. Then the reactive mixture was poured in a silicon mold and placed in an oven at 80°C. After 5 minutes at 80°C, the mixture was stirred a last time for 2 minutes. After 2h at 80°C, 30 minutes of temperature increase until 100°C and 1h at 100°C, a foam was obtained with an average density of 255 ± 7 Kg/m³.

| Compound | Structure | Content | Weight % |
|---|---|---|---|
| A | TMPTC | 5 g | 58.3 |
| B | DiA | 2.239 g | 26.1 |
| C | NAHcT | 0.687 g | 4.6 |
| H | DiTh | 0.394 g | 8 |
| D | DBU | 0.258 g | 3 |

Example 1C: Foaming using a thiol of the prior art in the absence of a masked thiol precursor. A mixture of compound A (TMPTC), compound B (DiA), compound H (DiTh) and compound D (DBU) was placed in a polypropylene beaker and stirred at room temperature for 2 minutes. Then the reactive mixture was poured in a silicon mold and placed in an oven at 80°C. After 5 minutes at 80°C, the mixture was stirred a last time for 2 minutes. After 2h at 80°C, 30 minutes of temperature increase until 100°C and 1h at 100°C, a well-formed foam was obtained with an average density of 603 ± 54 Kg/m³.

| Compound | Structure | Content | Weight % |
|---|---|---|---|
| A | TMPTC | 5 g | 62.8 |
| B | DiA | 1.919 g | 24.1 |
| H | DiTh | 0.787 g | 9.9 |
| D | DBU | 0.258 g | 3.2 |

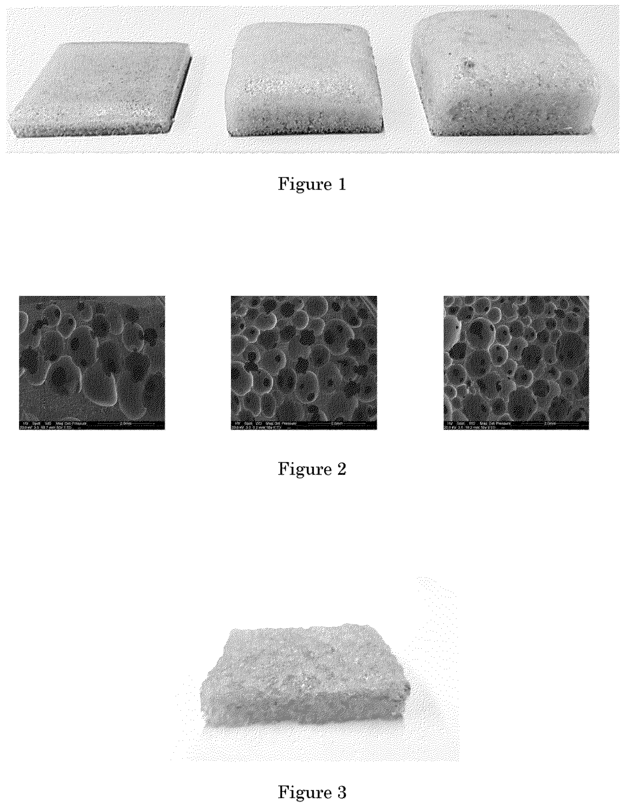

Figure 1 shows the different foams obtained in example 1: example 1C on the left, example 1B in the middle, example 1A on the right. It can be seen that the sample obtained in example 1C (in the absence of masked thiol precursor) is poorly foamed, whereas the samples obtained in examples 1A and 1B (with masked thiol precursor) are highly foamed. Therefore, the comparison of examples 1A, 1B and 1C demonstrates the importance of adding a masked thiol precursor (compound C), alone or in combination with a thiol (compound H) as illustrated in Figure 1. Without the masked thiol precursor of the present invention (example 1C), some foaming is observed however, the foam is not homogeneous and is poorly expanded when the formulation is directly heated at the foaming temperature. In the presence of the masked thiol precursor (examples 1A and 1B), homogeneous and more expanded foams are formed as the result of the rapid viscosity increase of the formulation when heated at the foaming temperature. Figure 2 shows SEM (Scanning Electron Micrography) micrographs of the different foams obtained in example 1: example 1C on the left, example 1B in the middle, example 1A on the right.

Example 2: Foaming with a masked thiol precursor in the absence of a thiol and in the absence of a catalyst. A mixture of compound A (TMPTC), compound B (DiA) and compound C (NAHcT) was placed in a beaker and stirred at room temperature for 2 minutes. Then the reactive mixture was poured in a silicon mold and placed in an oven at 100°C. After 5 minutes at 100°C, the mixture was stirred a last time for 2 minutes and then placed again in the oven at 100°C. After 3h at 100°C, a foam was obtained with an average density of 314 ± 35 Kg/m³.

| Compound | Structure | Content | Weight % |
|---|---|---|---|
| A | TMPTC | 5 g | 56 |
| B | DiA | 2.559 g | 28.6 |
| C | NAHcT | 1.374 g | 15.4 |

Figure 3 shows the foam obtained in example 2, without any catalyst. The sample was correctly foamed indicating that the foaming process occurs even in the absence of a catalyst.

Example 3: Foaming with a masked thiol precursor in the absence of a thiol and with an inorganic catalyst (compound D). A mixture of compound A (TMPTC), compound B (DiA), compound C (NAHcT) and compound D (K₃PO₄) was placed in a beaker and stirred at room temperature for 2 minutes. Then the reactive mixture was poured in a silicon mold and placed in an oven at 100°C. After 5 minutes at 100°C, the mixture was stirred a last time for 2 minutes and then placed again in the oven at 100°C. After 3h at 100°C, a foam was obtained with an average density of 305 ± 16 Kg/m³.

| Compound | Structure | Content | Weight % |
|---|---|---|---|
| A | TMPTC | 5 g | 53.8 |
| B | DiA | 2.559 g | 27.5 |
| C | NAHcT | 1.374 g | 14.8 |
| D | K₃PO₄ | 0.3665 g | 3.9 |

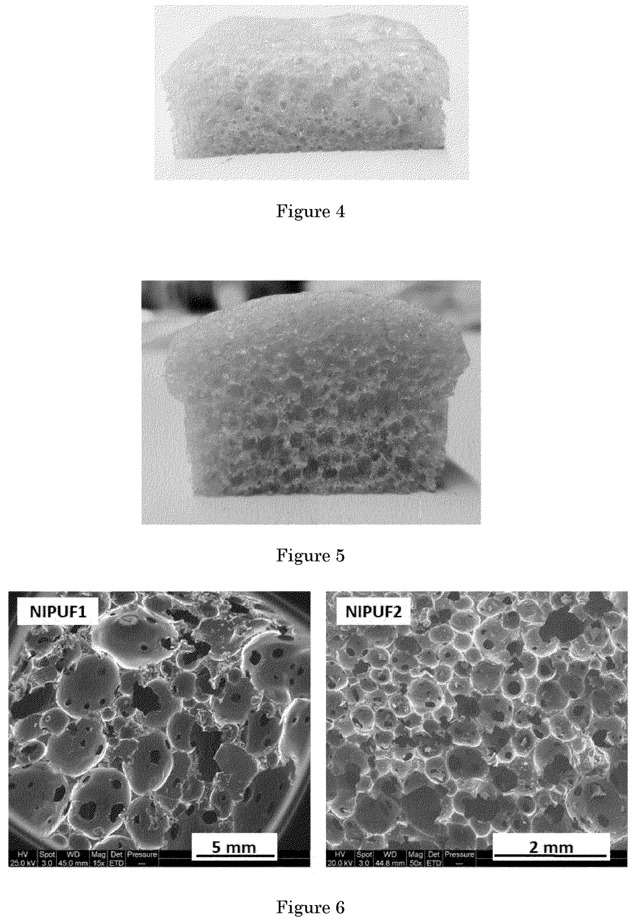

Figure 4 shows the foam obtained in example 3, with an inorganic catalyst. The sample was highly foamed, indicating that such a catalyst is efficient to promote the reaction process.

Example 4: Foaming with a masked thiol precursor in the absence of a thiol with another diamine. A mixture of compound A (TMPTC), compound B (m-x Dia), compound C (NAHcT) and compound D (DBU) was placed in a beaker and stirred at room temperature for 2 minutes. Then the reactive mixture was poured in a silicon mold and placed in an oven at 80°C. After 5 minutes at 80°C, the mixture was stirred a last time for 2 minutes and then placed again in the oven at 80°C. After 2h at 80°C, 30 minutes of temperature increase until 100°C and 1h at 100°C, a rigid foam was obtained with an average density of 109 ± 11 Kg/m³.

| Compound | Structure | Content | Weight % |
|---|---|---|---|
| A | TMPTC | 5 g | 55.6 |
| B | m-x DiA | 2.353 g | 26.2 |
| C | NAHcT | 1.374 g | 15.3 |
| D | DBU | 0.263 g | 2.9 |

A viscosity measurement was performed on the mixture TMPTC as compound A, m-x DiA as compound B and DBU as compound D, without the compound C. The initial viscosity as measured by rheology was 10 Pa.s and it increased to 10 000 Pa.s after 2 hours in the oven at 80°C. We therefore noticed an increase of viscosity of a factor 1000. Rheology was performed on an ARES Rheometric scientific rheometer, equipped with two parallel plate geometries at a frequency of 1.6 Hz, a strain of 1 %.

Figure 5 shows the foam obtained in example 4, with compound B being m-x Dia. The sample is highly foamed, indicating that such formulation is also efficient to obtain rigid polyurethane foams.

Example 5: Process for recycling a NIPU foam made from masked thiol precursor. A NIPU foam was prepared according to example 1A, with the same compounds, in same quantities. The sample was cured 5 hours at 80°C and then allowed to cool down to room temperature before demolding. Characterizations were performed at least after 24 hours of equilibration under ambient atmosphere. The obtained sample is referred to as NIPUF1. The obtained density is 167 Kg.m⁻³.

A second NIPU foam was prepared with the compounds of example 4, in same quantities. The curing was performed for 5 hours at 80°C. The obtained sample is referred to as NIPUF2. The obtained density is 185 Kg.m⁻³. Figure 6 shows SEM images of the foams NIPUF1 and NIPUF2. These two foams were then reprocessed by compression molding as follows: a foam slice (NIPUF1 or NIPUF2) about 0.5 cm thick (about 2 g) was placed between Teflon sheets and pressed for 2h at 160 °C under a 1 tonne force. 3 cycles of applying-releasing the pressure were performed in the beginning to allow volatiles draining in order to give well-formed, cracks-free and homogeneous NIPU films.

NIPU films of mixed composition were also prepared by grinding NIPUF1 (1 g) and NIPUF2 (1 g) together in liquid nitrogen in order to give a homogeneous fine powder. This powder was briefly dried for 15 minutes in an oven at 60 °C before being placed between Teflon sheets and reprocessed as previously described to provide a NIPU film.

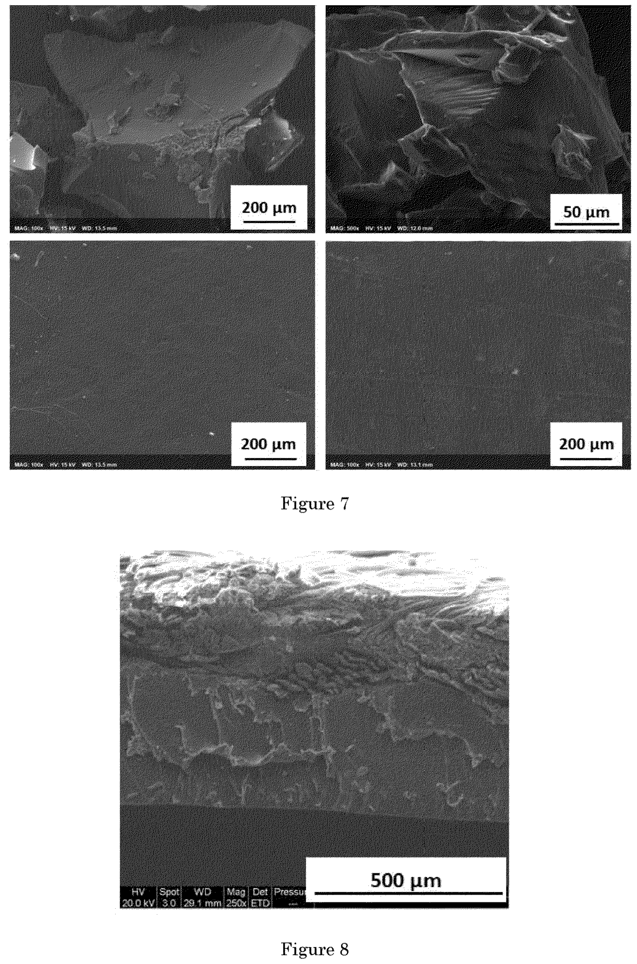

The obtained films were characterized by SEM, showing no cracks as can be seen in Figure 7. The samples were further characterized by Dynamic Mechanical Analysis (DMA) and Differential Scanning Calorimetry (DSC). Therefore, pieces of about 25 x 6 mm were cut out of NIPU films. Thickness was in the range of 0.2 to 0.5 mm. Samples were analyzed on a DMA Q800 (TA) with a preload force of 0.0 1N and an oscillating amplitude of 5 µm between -80 and 160 °C at a heating rate of 3 °C/min. T_{α} was determined as a maximum of the tan delta curve. Analysis by DSC was performed on a TA DSC250 apparatus. About 4 mg of samples were sealed in the pan for analysis between -80 and 80 °C under N₂ flow at a rate of 10 °C/min.

| Properties | Reprocessed NIPUF1 | Mix of NIPUF 1 and 2 reprocessed | Reprocessed NIPUF2 |
|---|---|---|---|
| T_{g} (°C) (DSC) | -22 | -19/8 | 18 |
| T_{α} (°C) (DMA) | -11 | -8 / 18 | 23 |

NIPU films were also analyzed on an Instron device. Samples of 50 x 5 mm were studied in traction mode at a rate of 2mm/min.

| Properties | Reprocessed NIPUF1 | Mix of NIPUF 1 and 2 reprocessed | Reprocessed NIPUF2 |
|---|---|---|---|
| Young modulus (MPa) | 0.00848 ± 0.00076 | 0.0111 ± 0.00082 | 0.373 ± 0.191 |
| Deformat. at break (%) | 87 ± 10 | 100 ± 6 | 258 ± 35 |

Example 6: Process for recycling a NIPU foam obtained from masked thiol precursor as coated fabric. NIPU films were prepared according to the process described in Example 5. The as-prepared films were pressed on CORDURA^{®} nylon fabrics with a linear density of 330 den and a surface density of 185 g/m². Both films were pressed for 2h at 160 °C under a 4 tonne pressure on the fabric, between Teflon sheets, to give coated fabrics. SEM pictures (Figure 8) of the composite suggest a good impregnation between the NIPU film and the fabric.

Example 7: Process for recycling a NIPU foam obtained from masked thiol precursor as adhesive. The NIPU coated fabric composite as prepared from NIPUF1 foam was cut as slices of about 6 mm wide and 30 mm long and superimposed over about 5 mm before being pressed at 160 °C for 10 minute under minimal pressure to ensure good contact between the NIPU layers. At least 3 samples were tested for lap-shear test in traction at 2 mm/min with a preload of 0.1N.

| Properties | NIPUF1 composite lap-shear sample |
|---|---|
| Stress at break (MPa) | 2 ± 0.4 |
| Strain at break (%) | 20.5 ± 4.1 |

## Claims

1. A curable isocyanate-free formulation for preparing a polyurethane self-blowing foam comprising at least one multifunctional cyclic carbonate having at least two cyclic carbonate groups at the end of the chain (compound A), at least one multifunctional amine (compound B), at least one masked thiol precursor (compound C) and optionally at least one catalyst (compound D).

2. Formulation according to claim 1 wherein compound A corresponds to formula I 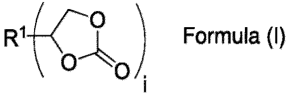 wherein
i is an integer higher than or equal to 2, in particular from 2 to 10, more particularly 2 or 3,
R¹ is a carbon bond between the cyclic carbonate rings or is a linear or branched hydrocarbon chain, which may be unsubstituted or substituted and wherein one or several hydrocarbon groups of said hydrocarbon chain may be replaced by a heteroatom, a ketone, a cycloalkyl, a heterocycle, an aryl or a heteroaryl, each of which may be unsubstituted or substituted, said hydrocarbon chain having at least 2 carbon atoms, in particular from 3 to 60 carbon atoms.

3. Formulation according to claim 1 or 2 wherein compound B corresponds to formula II
R²-(NHR')j Formula (II)
wherein
j is an integer higher than or equal to 2, in particular from 2 to 6,
R² is an aryl or heteroaryl, each of which may be unsubstituted or substituted, or a linear or branched hydrocarbon chain, which may be unsubstituted or substituted, and wherein one or several hydrocarbon groups of said hydrocarbon chain may be replaced by a heteroatom, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms, and
wherein R' each independently may be hydrogen, an alkyl or a cycloalkyl.

4. Formulation according to any one of the preceding claims wherein compound C corresponds to formula III, IV, V or VI 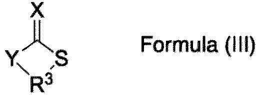 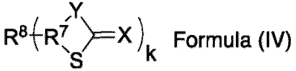 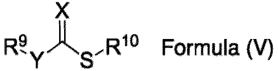 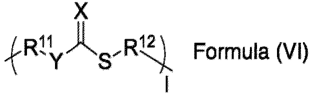 wherein
k is an integer higher than or equal to 2, in particular from 2 to 6,
1 is an integer higher than or equal to 2, in particular from 2 to 1000,
X is O or S,
Y is O, S, NR⁴, CR⁵R⁶,
R³ is a linear or branched hydrocarbon chain, which may be unsubstituted or substituted, and wherein one or several hydrocarbon groups of said hydrocarbon chain may be replaced by an aryl, a heteroatom, a ketone, an amide, an amine, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms, said hydrocarbon chain including carbon and hydrogen atoms wherein the carbon groups are linked through single or double bonds,
R⁴ is hydrogen or a linear or branched hydrocarbon chain, which may be unsubstituted or substituted, and wherein one or several hydrocarbon groups of said hydrocarbon chain may be replaced by an aryl, a heteroatom, a ketone, an amide, an amine, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms,
R⁵ and R⁶ are identical or different and are hydrogen or a linear or branched hydrocarbon chain, which may be unsubstituted or substituted, and wherein one or several hydrocarbon groups of said hydrocarbon chain may be replaced by an aryl, a heteroatom, a ketone, an amide, an amine, a cycloalkyl or an heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms, R⁵ and R⁶ together may form a cyclic structure,
R⁷ is a linear or branched hydrocarbon chain, which may be unsubstituted or substituted, and wherein one or several hydrocarbon groups of said hydrocarbon chain may be replaced by an aryl, a heteroatom, a ketone, an amide, an amine, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms,
R⁸ is a linear or branched hydrocarbon chain, which may be unsubstituted or substituted, and wherein one or several hydrocarbon groups of said hydrocarbon chain may be replaced by a heteroatom, a ketone, an amide, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms, or R⁸ is a linear or branched polymeric group,
R⁹ and R¹⁰ are identical or different, and are a linear or branched hydrocarbon chain, which may be unsubstituted or substituted, and wherein one or several hydrocarbon groups of said hydrocarbon chain may be replaced by a heteroatom, a ketone, an amide, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms, or R⁹ or/and R¹⁰ is/are a linear or branched polymeric group,
R¹¹ and R¹² are identical or different, and are a linear or branched hydrocarbon chain, which may be unsubstituted or substituted, and wherein one or several hydrocarbon groups of said hydrocarbon chain may be replaced by a heteroatom, a ketone, an amide, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms.

5. Formulation according to any one of the preceding claims wherein compound C is selected from the group consisting of thiolactones, xanthates, thioesters, thiocarbonates and thiocarbamates.

6. Formulation according to any one of the preceding claims wherein compound D is selected from the group consisting of an amine catalyst, an ionic salt or ionic liquid composed of a combination of a cation and an anion, organometallic catalyst and a phosphine-based catalyst and is preferably 1,8-diazabicyclo[5.4.0]undec-7-ene, tetrabutylammonium phenolate, potassium carbonate, cesium carbonate or potassium phosphate or hydrogenophosphate.

7. Formulation according to any one of the preceding claims wherein compound A is present in an amount of from 18 to 80 wt%, in particular from 40 to 70 wt%, more in particular from 40 to 60 wt%, the percentage being expressed relative to the total weight of the formulation.

8. Formulation according to any one of the preceding claims wherein compound B is present in an amount of from 10 to 80 wt%, in particular from 10 to 70 wt%, more in particular from 10 to 50 wt%, the percentage being expressed relative to the total weight of the formulation.

9. Formulation according to any one of the preceding claims wherein compound C is present in an amount of from 1 to 60 wt%, in particular from 2 to 40 wt%, more in particular from 5 to 20 wt%, the percentage being expressed relative to the total weight of the formulation.

10. Formulation according to any one of the preceding claims wherein compound D is present in an amount of from 0.1 to 15 wt%, in particular from 0.5 to 7 wt%, the percentage being expressed relative to the total weight of the formulation.

11. Formulation according to any one of the preceding claims further comprising a multifunctional thiol (compound H), preferably in an amount of from 1 to 50 wt%, in particular from 2 to 10 wt%, the percentage being expressed relative to the total weight of the formulation, said multifunctional thiol preferably corresponding to formula XII
R²⁶(-SH)ᵣ Formula (XII)
wherein
r is an integer higher than or equal to 2, in particular from 2 to 6,
R²⁶ is a linear or branched hydrocarbon chain, which may be unsubstituted or substituted, and wherein one or several hydrocarbon groups of said hydrocarbon chain may be replaced by a heteroatom, a ketone, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms, or R²⁶ is a linear or branched polymeric group.

12. Formulation according to any one of the preceding claims further comprising a polyepoxide (compound I), preferably in an amount of from 0.1 to 50 wt%, in particular from 0.5 to 20 wt%, the percentage being expressed relative to the total weight of the formulation.

13. Process for preparing a polyurethane self-blowing foam comprising the steps of providing a formulation as defined in any one of the preceding claims and curing said formulation at a temperature between 25°C and 200°C so as to promote the formation of CO₂ and form a non-isocyanate polyurethane foam.

14. Process for recycling a polyurethane foam obtainable by the process as defined in claim 13 by compression molding or extrusion.

15. Recycled polyurethane foam obtainable by the process as defined in claim 14 processed as a film, coating, adhesive, fibre or as bulk material.

## Patentansprüche

1. Härtbare isocyanatfreie Formulierung zur Herstellung eines selbstblähenden Polyurethanschaumstoffs, umfassend mindestens ein multifunktionelles zyklisches Carbonat mit mindestens zwei zyklischen Carbonatgruppen am Kettenende (Verbindung A), mindestens ein multifunktionelles Amin (Verbindung B), mindestens einen maskierten Thiolvorläufer (Verbindung C) und gegebenenfalls mindestens einen Katalysator (Verbindung D).

2. Formulierung nach Anspruch 1, wobei Verbindung A der Formel I entspricht 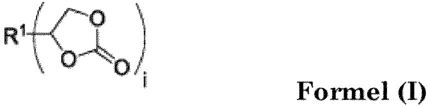 wobei
i eine ganze Zahl größer oder gleich 2 ist, insbesondere von 2 bis 10, ganz besonders 2 oder 3,
R¹ eine Kohlenstoffbindung zwischen den zyklischen Carbonatringen ist oder eine lineare oder verzweigte Kohlenwasserstoffkette ist, die unsubstituiert oder substituiert sein kann und in der eine oder mehrere Kohlenwasserstoffgruppen der Kohlenwasserstoffkette durch ein Heteroatom, ein Keton, ein Cycloalkyl, einen Heterozyklus, ein Aryl oder ein Heteroaryl ersetzt sein können, die jeweils unsubstituiert oder substituiert sein können, wobei die Kohlenwasserstoffkette mindestens 2 Kohlenstoffatome, insbesondere von 3 bis 60 Kohlenstoffatome hat.

3. Formulierung nach Anspruch 1 oder 2, wobei Verbindung B der Formel II entspricht
R²-(NHR')j **Formel (II)**
wobei
j eine ganze Zahl größer oder gleich 2, insbesondere von 2 bis 6, ist,
R² ein Aryl oder Heteroaryl ist, wobei jedes davon unsubstituiert oder substituiert sein kann, oder eine lineare oder verzweigte Kohlenwasserstoffkette, die unsubstituiert oder substituiert sein kann, wobei eine oder mehrere Kohlenwasserstoffgruppen der Kohlenwasserstoffkette durch ein Heteroatom ersetzt sein können, ein Cycloalkyl oder einen Heterocyclus ersetzt sein kann, wobei jedes davon unsubstituiert oder substituiert sein kann, wobei die Kohlenwasserstoffkette mindestens 2 Kohlenstoffatome, insbesondere von 2 bis 60 Kohlenstoffatome, ganz besonders von 2 bis 20 Kohlenstoffatome, noch spezieller von 2 bis 15 Kohlenstoffatome hat, und
wobei R' jeweils unabhängig voneinander Wasserstoff, ein Alkyl oder ein Cycloalkyl sein kann.

4. Formulierung nach einem der vorstehenden Ansprüche, wobei Verbindung C der Formel III, IV, V oder VI entspricht 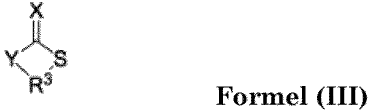 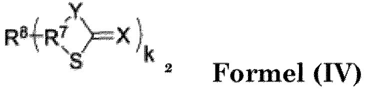 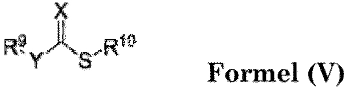 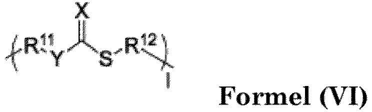 wobei
k eine ganze Zahl größer oder gleich 2 ist, insbesondere von 2 bis 6,
1 eine ganze Zahl größer als oder gleich 2 ist, insbesondere von 2 bis 1000,
X O oder S ist,
Y O, S, NR⁴, CR⁵R⁶ ist,
R³ eine lineare oder verzweigte Kohlenwasserstoffkette ist, die unsubstituiert oder substituiert sein kann, und wobei eine oder mehrere Kohlenwasserstoffgruppen der Kohlenwasserstoffkette durch ein Aryl, ein Heteroatom, ein Keton, ein Amid, ein Amin, ein Cycloalkyl oder einen Heterocyclus ersetzt sein können, wobei jedes davon unsubstituiert oder substituiert sein kann, wobei die Kohlenwasserstoffkette mindestens 2 Kohlenstoffatome, insbesondere von 2 bis 60 Kohlenstoffatome, ganz besonders von 2 bis 20 Kohlenstoffatome, noch spezieller von 2 bis 15 Kohlenstoffatome hat, wobei die Kohlenwasserstoffkette Kohlenstoff- und Wasserstoffatome einschließt, wobei die Kohlenstoffgruppen durch Einfach- oder Doppelbindungen verbunden sind,
R⁴ Wasserstoff oder eine lineare oder verzweigte Kohlenwasserstoffkette ist, die unsubstituiert oder substituiert sein kann, und wobei eine oder mehrere Kohlenwasserstoffgruppen der Kohlenwasserstoffkette durch ein Aryl, ein Heteroatom, ein Keton, ein Amid, ein Amin, ein Cycloalkyl oder einen Heterocyclus ersetzt sein können, wobei jedes davon unsubstituiert oder substituiert sein kann, wobei die Kohlenwasserstoffkette mindestens 2 Kohlenstoffatome, insbesondere von 2 bis 60 Kohlenstoffatome, ganz besonders von 2 bis 20 Kohlenstoffatome, noch spezieller von 2 bis 15 Kohlenstoffatome hat,
R⁵ und R⁶ gleich oder verschieden sind und Wasserstoff oder eine lineare oder verzweigte Kohlenwasserstoffkette sind, die unsubstituiert oder substituiert sein kann, und wobei eine oder mehrere Kohlenwasserstoffgruppen der Kohlenwasserstoffkette durch ein Aryl, ein Heteroatom, ein Keton, ein Amid, ein Amin, ein Cykloalkyl oder einen Heterocyklus ersetzt sein können, wobei jedes davon unsubstituiert oder substituiert sein kann, wobei die Kohlenwasserstoffkette mindestens 2 Kohlenstoffatome, insbesondere von 2 bis 60 Kohlenstoffatome, ganz besonders von 2 bis 20 Kohlenstoffatome, noch spezieller von 2 bis 15 Kohlenstoffatome hat, wobei R5 und R6 zusammen eine zyklische Struktur bilden können,
R⁷ eine lineare oder verzweigte Kohlenwasserstoffkette ist, die unsubstituiert oder substituiert sein kann, und wobei eine oder mehrere Kohlenwasserstoffgruppen der Kohlenwasserstoffkette durch ein Aryl, ein Heteroatom, ein Keton, ein Amid, ein Amin, ein Cycloalkyl oder einen Heterocyclus ersetzt sein können, wobei jedes davon unsubstituiert oder substituiert sein kann, wobei die Kohlenwasserstoffkette mindestens 2 Kohlenstoffatome, insbesondere von 2 bis 60 Kohlenstoffatome, ganz besonders von 2 bis 20 Kohlenstoffatome, noch spezieller von 2 bis 15 Kohlenstoffatome hat,
R⁸ eine lineare oder verzweigte Kohlenwasserstoffkette ist, die unsubstituiert oder substituiert sein kann, und wobei eine oder mehrere Kohlenwasserstoffgruppen der Kohlenwasserstoffkette durch ein Heteroatom, ein Keton, ein Amid, ein Cycloalkyl oder einen Heterocyclus ersetzt sein können, wobei jede davon unsubstituiert oder substituiert sein kann, wobei die Kohlenwasserstoffkette mindestens 2 Kohlenstoffatome, insbesondere von 2 bis 60 Kohlenstoffatome, ganz besonders von 2 bis 20 Kohlenstoffatome, noch spezieller von 2 bis 15 Kohlenstoffatome hat, oder R8 eine lineare oder verzweigte polymere Gruppe ist,
R⁹ und R¹⁰ gleich oder verschieden sind und eine lineare oder verzweigte Kohlenwasserstoffkette sind, die unsubstituiert oder substituiert sein kann, und wobei eine oder mehrere Kohlenwasserstoffgruppen der Kohlenwasserstoffkette durch ein Heteroatom, ein Keton, ein Amid, ein Cycloalkyl oder einen Heterocyclus ersetzt sein können, wobei jedes davon unsubstituiert oder substituiert sein kann, wobei die Kohlenwasserstoffkette mindestens 2 Kohlenstoffatome, insbesondere von 2 bis 60 Kohlenstoffatome, ganz besonders von 2 bis 20 Kohlenstoffatome, noch spezieller von 2 bis 15 Kohlenstoffatome hat, oder R9 oder/und R10 eine lineare oder verzweigte polymere Gruppe ist/sind,
R¹¹ und R¹² gleich oder verschieden sind und eine lineare oder verzweigte Kohlenwasserstoffkette sind, die unsubstituiert oder substituiert sein kann, und wobei eine oder mehrere Kohlenwasserstoffgruppen der Kohlenwasserstoffkette durch ein Heteroatom, ein Keton, ein Amid, ein Cycloalkyl oder einen Heterocyclus ersetzt sein können, wobei jede davon unsubstituiert oder substituiert sein kann, wobei die Kohlenwasserstoffkette mindestens 2 Kohlenstoffatome, insbesondere von 2 bis 60 Kohlenstoffatome, ganz besonders von 2 bis 20 Kohlenstoffatome, noch spezieller von 2 bis 15 Kohlenstoffatome hat.

5. Formulierung nach einem der vorstehenden Ansprüche, wobei Verbindung C ausgewählt ist aus der Gruppe bestehend aus Thiolactonen, Xanthaten, Thioestern, Thiocarbonaten und Thiocarbamaten.

6. Formulierung nach einem der vorstehenden Ansprüche, wobei Verbindung D aus der Gruppe ausgewählt ist, bestehend aus einem Aminkatalysator, einem ionischen Salz oder einer ionischen Flüssigkeit, zusammengesetzt aus einer Kombination aus einem Kation und einem Anion , einem organometallischen Katalysator und einem Katalysator auf Phosphinbasis und vorzugsweise 1,8-Diazabicyclo[5.4.0]undec-7-en, Tetrabutylammoniumphenolat, Kaliumcarbonat, Cäsiumcarbonat oder Kaliumphosphat oder Hydrogenophosphat ist.

7. Formulierung nach einem der vorstehenden Ansprüche, wobei Verbindung A in einer Menge von 18 bis 80 Gew.-%, insbesondere von 40 bis70 Gew.-%, ganz besonders von 40 bis60 Gew.-%, vorliegt, wobei der Prozentsatz relativ zum Gesamtgewicht der Formulierung ausgedrückt ist.

8. Formulierung nach einem der vorstehenden Ansprüche, wobei Verbindung B in einer Menge von 10 bis 80 Gew.-%, insbesondere von 10 bis 70 Gew.-%, ganz besonders von 10 bis 50 Gew.-%, vorliegt, wobei der Prozentsatz relativ zum Gesamtgewicht der Formulierung ausgedrückt ist.

9. Formulierung nach einem der vorstehenden Ansprüche, wobei Verbindung C in einer Menge von 1 bis 60 Gew.-%, insbesondere von 2 bis 40 Gew.-%, ganz besonders von 5 bis 20 Gew.-%, vorliegt, wobei der Prozentsatz relativ zum Gesamtgewicht der Formulierung ausgedrückt ist.

10. Formulierung nach einem der vorstehenden Ansprüche, wobei Verbindung D in einer Menge von 0,1 bis 15 Gew.-%, insbesondere von 0,5 bis7 Gew.-%, vorliegt, wobei der Prozentsatz relativ zum Gesamtgewicht der Formulierung ausgedrückt ist.

11. Formulierung nach einem der vorstehenden Ansprüche, ferner umfassend ein multifunktionelles Thiol (Verbindung H), vorzugsweise in einer Menge von 1 bis 50 Gew.-%, insbesondere von 2 bis 10 Gew.-%, wobei der Prozentsatz relativ zum Gesamtgewicht der Formulierung ausgedrückt ist, wobei das multifunktionelle Thiol vorzugsweise der Formel XII entspricht
R²⁶(-SH)ᵣ **Formel (XII)**
wobei
r eine ganze Zahl größer oder gleich 2, insbesondere von 2 bis 6, ist,
R²⁶ eine lineare oder verzweigte Kohlenwasserstoffkette ist, die unsubstituiert oder substituiert sein kann, und wobei eine oder mehrere Kohlenwasserstoffgruppen der Kohlenwasserstoffkette durch ein Heteroatom, ein Keton, ein Cycloalkyl oder einen Heterocyclus ersetzt sein können, wobei jede davon unsubstituiert oder substituiert sein kann, wobei die Kohlenwasserstoffkette mindestens 2 Kohlenstoffatome, insbesondere von 2 bis 60 Kohlenstoffatome, ganz besonders von 2 bis 20 Kohlenstoffatome, noch spezieller von 2 bis 15 Kohlenstoffatome hat, oder R26 eine lineare oder verzweigte polymere Gruppe ist.

12. Formulierung nach einem der vorstehenden Ansprüche, ferner umfassend ein Polyepoxid (Verbindung I), vorzugsweise in einer Menge von 0,1 bis 50 Gew.-%, insbesondere von 0,5 bis 20 Gew.-%, wobei der Prozentsatz relativ zum Gesamtgewicht der Formulierung ausgedrückt ist.

13. Verfahren zum Herstellen eines selbstblähenden Polyurethanschaumstoffs, umfassend die Schritte zum Bereitstellen einer Formulierung, wie in einem der vorstehenden Ansprüche definiert, und Aushärten der Formulierung bei einer Temperatur zwischen 25 °C und 200 °C, um die Bildung von CO₂ zu fördern und einen isocyanatfreien Polyurethanschaumstoff zu bilden.

14. Verfahren zum Recyceln eines Polyurethanschaumstoffs, erhältlich durch das Verfahren wie in Anspruch 13 definiert, durch Formpressen oder Extrusion.

15. Recycelter Polyurethanschaumstoff, erhältlich durch das Verfahren wie in Anspruch 14 definiert, hergestellt als Film, Beschichtung, Klebstoff, Faser oder als Schüttgut.

## Revendications

1. Une formulation durcissable, exempte d'isocyanate, pour la préparation d'une mousse autogonflante de polyuréthane comprenant au moins un carbonate cyclique multifonctionnel comportant au moins deux groupes carbonates cycliques en bout de chaîne (composé A), au moins une amine multifonctionnelle (composé B), au moins un précurseur de thiol masqué (composé C) et éventuellement au moins un catalyseur (composé D).

2. Formulation selon la revendication 1, dans laquelle le composé A répond à la formule 1 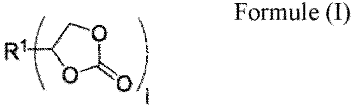 dans laquelle
i est un nombre entier supérieur ou égal à 2, en particulier compris de 2 à 10, égal plus particulièrement à 2 ou 3,
R¹ est une liaison carbone entre les anneaux de carbonate cycliques ou est une chaîne hydrocarbonée linéaire ou ramifiée, chacun desquels pouvant être substitué ou non substitué et dans laquelle un ou plusieurs groupes hydrocarbonés de ladite chaîne hydrocarbonée peuvent être remplacés par un hétéroatome, une cétone, un cycloalkyle, un hétérocycle, un aryle ou un hétéroaryle, chacun desquels pouvant être substitué ou non substitué, ladite chaîne hydrocarbonée comportant au moins 2 atomes de carbone, notamment de 3 à 60 atomes de carbone.

3. Formulation selon la revendication 1 ou 2 dans laquelle le composé B répond à la formule II
R²-(NHR')j Formule (II)
dans laquelle
j est un nombre entier supérieur ou égal à 2, en particulier de 2 à 6,
R² est un aryle ou un hétéroaryle, chacun desquels pouvant être substitué ou non substitué, ou une chaîne hydrocarbonée linéaire ou ramifiée, pouvant être substituée ou non, et dans laquelle un ou plusieurs groupes hydrocarbonés de ladite chaîne hydrocarbonée peuvent être remplacés par un hétéroatome, un cycloalkyle ou un hétérocycle, chacun desquels pouvant être substitué ou non substitué, ladite chaîne hydrocarbonée comportant au moins 2 atomes de carbone, notamment de 2 à 60 atomes de carbone, plus particulièrement de 2 à 20 atomes de carbone, encore plus particulièrement de 2 à 15 atomes de carbone, et
dans laquelle R' peut être chacun, indépendamment l'un de l'autre, l'hydrogène, un alkyle ou un cycloalkyle.

4. Formulation selon l'une quelconque des revendications précédentes dans laquelle le composé C répond à l'une des formules III, IV, V ou VI 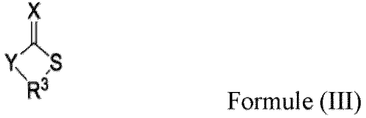 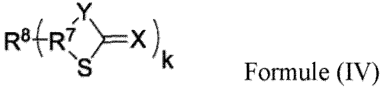 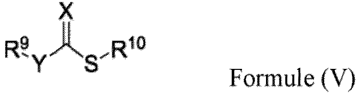 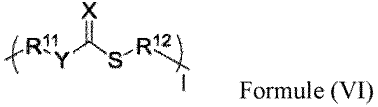 dans laquelle
k est un nombre entier supérieur ou égal à 2, notamment de 2 à 6,
1 est un nombre entier supérieur ou égal à 2, notamment de 2 à 1000,
X est O ou S,
Y est O, S, NR⁴, CR⁵R⁶,
R³ est une chaîne hydrocarbonée linéaire ou ramifiée, qui peut être substituée ou non substituée, et dans laquelle un ou plusieurs groupes hydrocarbonés de ladite chaîne hydrocarbonée peuvent être remplacés par un aryle, un hétéroatome, une cétone, un amide, une amine, un cycloalkyle ou un hétérocycle, chacun desquels pouvant être substitué ou non substitué, ladite chaîne hydrocarbonée comportant au moins 2 atomes de carbone, notamment de 2 à 60 atomes de carbone, plus particulièrement de 2 à 20 atomes de carbone, encore plus particulièrement de 2 à 15 atomes de carbone, ladite chaîne hydrocarbonée comportant des atomes de carbone et d'hydrogène dans laquelle les groupes carbonés sont liés par des liaisons simples ou doubles,
R⁴ est l'hydrogène ou une chaîne hydrocarbonée linéaire ou ramifiée, qui peut être substituée ou non substituée, et dans laquelle un ou plusieurs groupes hydrocarbonés de ladite chaîne hydrocarbonée peuvent être remplacés par un aryle, un hétéroatome, une cétone, un amide, une amine, un cycloalkyle ou un hétérocycle, chacun desquels pouvant être substitué ou non substitué, ladite chaîne hydrocarbonée comportant au moins 2 atomes de carbone, en particulier de 2 à 60 atomes de carbone, plus particulièrement de 2 à 20 atomes de carbone, encore plus particulièrement de 2 à 15 atomes de carbone,
R⁵ et R⁶ sont identiques ou différents et représentent l'hydrogène ou une chaîne hydrocarbonée linéaire ou ramifiée, qui peut être substituée ou non substituée, et dans laquelle un ou plusieurs groupes hydrocarbonés de ladite chaîne hydrocarbonée peuvent être remplacés par un aryle, un hétéroatome, une cétone, un amide, une amine, un cycloalkyle ou un hétérocycle, chacun desquels pouvant être substitué ou non substitué, ladite chaîne hydrocarbonée comportant au moins 2 atomes de carbone, en particulier de 2 à 60 atomes de carbone, plus particulièrement de 2 à 20 atomes de carbone, encore plus particulièrement de 2 à 15 atomes de carbone, R⁵ et R⁶ peuvent former ensemble une structure cyclique,
R⁷ est une chaîne hydrocarbonée linéaire ou ramifiée, qui peut être substituée ou non, et dans laquelle un ou plusieurs groupes hydrocarbonés de ladite chaîne hydrocarbonée peuvent être remplacés par un aryle, un hétéroatome, une cétone, un amide, une amine, un cycloalkyle ou un hétérocycle, chacun desquels pouvant être substitué ou non substitué, ladite chaîne hydrocarbonée comportant au moins 2 atomes de carbone, en particulier de 2 à 60 atomes de carbone, plus particulièrement de 2 à 20 atomes de carbone, encore plus particulièrement de 2 à 15 atomes de carbone,
R⁸ est une chaîne hydrocarbonée linéaire ou ramifiée, qui peut être substituée ou non, et dans laquelle un ou plusieurs groupes hydrocarbonés de ladite chaîne hydrocarbonée peuvent être remplacés par un hétéroatome, une cétone, un amide, un cycloalkyle ou un hétérocycle, chacun desquels pouvant être non substitué ou substitué, ladite chaîne hydrocarbonée comportant au moins 2 atomes de carbone, notamment de 2 à 60 atomes de carbone, plus particulièrement de 2 à 20 atomes de carbone, encore plus particulièrement de 2 à 15 atomes de carbone, ou R⁸ est un groupe polymère linéaire ou ramifié,
R⁹ et R¹⁰ sont identiques ou différents et représentent une chaîne hydrocarbonée linéaire ou ramifiée, qui peut être non substituée ou substituée, et dans laquelle un ou plusieurs groupes hydrocarbonés de ladite chaîne hydrocarbonée peuvent être remplacés par un hétéroatome, une cétone, un amide, un cycloalkyle ou un hétérocycle, chacun desquels pouvant être non substitué ou substitué, ladite chaîne hydrocarbonée comportant au moins 2 atomes de carbone, notamment de 2 à 60 atomes de carbone, plus particulièrement de 2 à 20 atomes de carbone, encore plus particulièrement de 2 à 15 atomes de carbone, ou R⁹ ou/et R¹⁰ représentent un groupe polymère linéaire ou un groupe ramifié,
R¹¹ et R¹² sont identiques ou différents, et représentent une chaîne hydrocarbonée linéaire ou ramifiée, qui peut être substituée ou non, et dans laquelle un ou plusieurs groupes hydrocarbonés de ladite chaîne hydrocarbonée peuvent être remplacés par un hétéroatome, une cétone, un amide, un cycloalkyle ou un hétérocycle, chacun desquels pouvant être substitué ou non substitué, ladite chaîne hydrocarbonée comportant au moins 2 atomes de carbone, en particulier de 2 à 60 atomes de carbone, plus particulièrement de 2 à 20 atomes de carbone, encore plus particulièrement de 2 à 15 atomes de carbone.

5. Formulation selon l'une quelconque des revendications précédentes dans laquelle le composé C est choisi dans le groupe constitué par les thiolactones, les xanthates, les thioesters, les thiocarbonates et les thiocarbamates.

6. Formulation selon l'une quelconque des revendications précédentes dans laquelle le composé D est choisi dans le groupe constitué par un catalyseur amine, un sel ionique ou un liquide ionique composé d'une combinaison d'un cation et d'un anion, un catalyseur organométallique et un catalyseur à base de phosphine et est de préférence le 1,8-diazabicyclo[5.4.0]undec-7-ène, le phénolate de tétrabutyl-ammonium, le carbonate de potassium, le carbonate de césium ou le phosphate ou l'hydrogénophosphate de potassium.

7. Formulation selon l'une quelconque des revendications précédentes dans laquelle le composé A est présent en une proportion de 18 à 80 % en poids, en particulier de 40 à 70 % en poids, plus particulièrement de 40 à 60 % en poids, le pourcentage étant exprimé par rapport au poids total de la formulation.

8. Formulation selon l'une quelconque des revendications précédentes dans laquelle le composé B est présent en une proportion de 10 à 80 % en poids, en particulier de 10 à 70 % en poids, plus particulièrement de 10 à 50 % en poids, le pourcentage étant exprimé par rapport au poids total de la formulation.

9. Formulation selon l'une quelconque des revendications précédentes dans laquelle le composé C est présent en une proportion de 1 à 60 % en poids, en particulier de 2 à 40 % en poids, plus particulièrement de 5 à 20 % en poids, le pourcentage étant exprimé par rapport au poids total de la formulation.

10. Formulation selon l'une quelconque des revendications précédentes dans laquelle le composé D est présent en une proportion de 0,1 à 15% en poids, en particulier de 0,5 à 7 % en poids, le pourcentage étant exprimé par rapport au poids total de la formulation.

11. Formulation selon l'une quelconque des revendications précédentes comprenant en outre un thiol multifonctionnel (composé H), de préférence en une proportion de 1 à 50 % en poids, en particulier de 2 à 10 % en poids, le pourcentage étant exprimé par rapport au poids total de la formulation, ledit thiol multifonctionnel correspondant de préférence à la formule XII.
R²⁶(-SH)ᵣ formule (XII)
dans laquelle
r est un nombre entier supérieur ou égal à 2, notamment de 2 à 6,
R²⁶ est une chaîne hydrocarbonée linéaire ou ramifiée, qui peut être substituée ou non substituée, et dans laquelle un ou plusieurs groupes hydrocarbonés de ladite chaîne hydrocarbonée peuvent être remplacés par un hétéroatome, une cétone, un cycloalkyle ou un hétérocycle, chacun desquels pouvant être substitué ou non substitué, ladite chaîne hydrocarbonée comportant au moins 2 atomes de carbone, notamment de 2 à 60 atomes de carbone, plus particulièrement de 2 à 20 atomes de carbone, encore plus particulièrement de 2 à 15 atomes de carbone, ou R²⁶ est un groupe polymère linéaire ou ramifié.

12. Formulation selon l'une quelconque des revendications précédentes comprenant en outre un polyépoxyde (composé I), de préférence en une proportion de 0,1 à 50 % en poids, notamment de 0,5 à 20 % en poids, le pourcentage étant exprimé par rapport au poids total de la formulation.

13. Procédé de préparation d'une mousse polyuréthane autogonflante comprenant les étapes consistant à fournir une formulation telle que définie dans l'une quelconque des revendications précédentes et à durcir ladite formulation à une température comprise entre 25°C et 200°C de manière à favoriser la formation de CO₂ et à former une mousse polyuréthane exempte d'isocyanate.

14. Procédé de recyclage d'une mousse polyuréthane susceptible d'être obtenue par le procédé tel que défini dans la revendication 13 par moulage, par compression ou extrusion.

15. Mousse polyuréthane recyclée susceptible d'être obtenue par le procédé tel que défini dans la revendication 14 mise sous forme de film, de revêtement, d'adhésif, de fibre ou de matériau en vrac.
